# EUROPEAN PATENT SPECIFICATION

(11) **EP 4 043 470 B1**
(45) Date of publication and mention of the grant of the patent: **06.11.2024**
(21) Application number: 21842001.6
(22) Date of filing: 16.07.2021
(51) Int. Cl.: B01J 37/02, C07F 17/00, B01J 21/08, C08F 4/659, C08F 210/16, B01J 31/14, B01J 31/16, B01J 31/22

(54) **TRANSITION METAL COMPOUND AND CATALYST COMPOSITION INCLUDING SAME**
ÜBERGANGSMETALLVERBINDUNG UND KATALYSATORZUSAMMENSETZUNG DAMIT
COMPOSÉ DE MÉTAL DE TRANSITION ET COMPOSITION DE CATALYSEUR LE COMPRENANT

(30) Priority: 16.07.2020 KR 20200088402; 15.07.2021 KR 20210092809
(43) Date of publication of application: 17.08.2022
(73) Proprietor: LG Chem, Ltd., Seoul 07336 (KR)
(72) Inventor: LEE, Insun, Yuseong-gu, Daejeon 34122 (KR); KIM, Seok Hwan, Yuseong-gu, Daejeon 34122 (KR); KIM, Byung Seok, Yuseong-gu, Daejeon 34122 (KR); JUNG, Yoonchul, Yuseong-gu, Daejeon 34122 (KR); KANG, Minyoung, Yuseong-gu, Daejeon 34122 (KR); KIM, Seyoung, Yuseong-gu, Daejeon 34122 (KR)
(74) Representative: Hoffmann Eitle
(86) International application number: PCT/KR2021/009156
(87) International publication number: WO 2022/015094

(56) References cited:
- EP-A1- 3 567 060
- WO-A1-2021/034459
- WO-A1-2021/194831
- WO-A2-2021/247244
- KR-A- 20170 009 596
- KR-A- 20200 050 844
- KR-B1- 101 139 268
- US-A1- 2009 023 873
- US-A1- 2017 037 164

## Description

### [TECHNICAL FIELD]

The present disclosure relates to a novel transition metal compound and a catalyst composition comprising the same.

### [BACKGROUND]

Linear low-density polyethylene has high breaking strength and elongation along with the characteristics of general polyethylene, and is excellent in tear strength and dart falling impact strength, and thus, is widely used in stretch films and overlap films, to which are difficult to apply to conventional low-density polyethylene or high-density polyethylene.

Since low-density polyethylene produced by the high-pressure method has a high melt tension and thus good moldability, it is provided for applications such as films and hollow containers. However, since the high-pressure low-density polyethylene has a large number of long-chain branched structures, there is a problem that mechanical strength such as tensile strength, tear strength or impact strength is deteriorated.

The ethylene-based polymer obtained by using Ziegler catalyst is superior in mechanical strength such as tensile strength, tear strength or impact resistance strength as compared with high-pressure low-density polyethylene, but it has a disadvantage in that a molded article such as a film is sticky.

In order to solve these problems, various ethylene-based polymers using a metallocene catalyst which is a homogeneous catalyst (single site catalyst) are disclosed.

Japanese Unexamined Patent Application Publication No. 2005-97481 discloses an ethylene-based polymer obtained by a gas phase polymerization in the presence of a catalyst composed of racemic ethylene bis(1-indenyl)zirconium diphenoxide. Japanese Unexamined Patent Application Publication No. 1997-111208 discloses an ethylene-based polymer (manufactured by Exxon Chemical, trade name: EXACT) obtained by using a metallocene compound as a polymerization catalyst. Japanese Unexamined Patent Application Publication No. 1999-269324 discloses an ethylene-based polymer obtained by a high-pressure ionic polymerization in the presence of a catalyst consisting of ethylene-bis(4,5,6,7-tetrahydroindenyl)zirconium dichloride and methylalumoxane. Japanese Unexamined Patent Application Publication No. 2002-3661 discloses an ethylene-based polymer obtained using a catalyst composed of bis(n-butylcyclopentadienyl)zirconium dichloride and methylalumoxane.

In addition, U.S. Patent No. 6,180,736 describes a method for preparing polyethylene having low production cost, almost no fouling, and stable polymerization activity, by using one type of metallocene catalyst and preparing in a single gas-phase reactor or continuous slurry reactor. Further, U.S. Patent No. 6,911,508 reports on the production of polyethylene with improved rheological properties, by performing polymerization in a single gas-phase reactor using a novel metallocene catalyst compound and 1-hexene as a comonomer. However, there is a problem in that the processability is not good due to the narrow molecular weight distribution. Further, U.S. Patent No. 6,828,394 reports on the process for preparing polyethylene, which is excellent in processability and is particularly suitable for films by using a mixture of a good comonomer incorporator and a poor comonomer incorporator.

On the other hand, U.S. Patent No. 6,841,631 and U.S. Patent No. 6,894,128 report that polyethylene having a bimodal or polymodal molecular weight distribution is produced with a metallocene-based catalyst using at least two metal compounds, and can be applied to usage such as film, blow molding, and pipe. However, these products have improved in processability, but there is a problem that the dispersed state according to the molecular weight in the unit particles is not uniform, so there is a problem that the extruded appearance is rough and the physical properties are not stable even under relatively good extrusion conditions.

KR 2017 0009596 A relates to a metallocene compound for olefin polymerization, to a catalyst composition comprising the same, and to a method for preparing olefin polymers using the catalyst composition. The compounds of this document are represented by the following general structure:

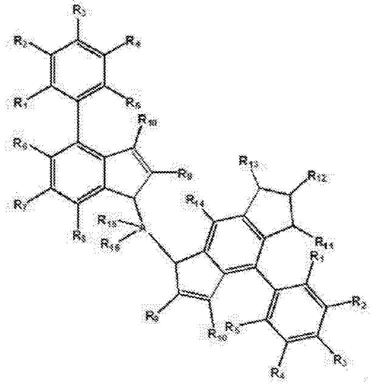

A specific compound, dichloro[[(1,2,3,3a,8a-.eta.)-4-[4-(1,1-dimethylethyl)phenyl]-6,7-dihydro-2-methyl-s-indacen-1(5H)-ylidene][[6-(1,1-dimethylethoxy)hexyl]methylsilylene][(1,2,3,3a,7a-,eta.)-4-[4-(1,1-dimehtylethyl)phenyl]-2-methyl-1H-inden-1-yl-dene]]-Zirconium, has the following structure:

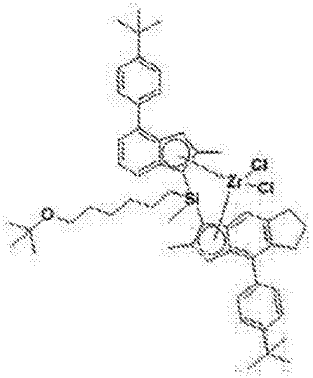

Against this background, there is a constant demand for the production of better products having a balance between physical properties and processability, and further improvement thereof is needed.

### [DETAILED DESCRIPTION OF THE INVENTION]

### [Technical Problem]

In the present disclosure, there is provided a novel transition metal compound that is useful for the production of polyethylene having a high molecular weight and an intramolecular short chain branch (SCB) content along with excellent catalytic activity for ethylene polymerization.

In addition, the present disclosure is to provide a catalyst composition containing the above-mentioned transition metal compound.

In addition, the present disclosure is to provide a method for preparing polyethylene using the catalyst composition, and polyethylene produced therefrom.

### [Technical Solution]

In an embodiment of the present disclosure, there is provided a transition metal compound represented by the following Chemical Formula 1: 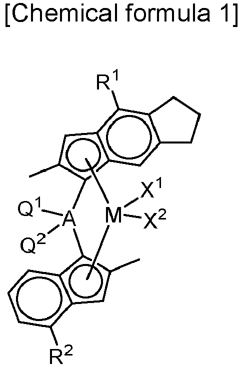 wherein in Chemical Formula 1,
A is a Group 14 element,
M is a Group 4 transition metal,
R¹ and R² are the same as or different from each other, and are each independently hydrogen, C₁₋₂₀ alkyl, C₂₋₂₀ alkenyl, C₁₋₂₀ alkylsilyl, C₁₋₂₀ silylalkyl, C₁₋₂₀ alkoxysilyl, C₁₋₂₀ alkoxy, C₆₋₂₀ aryl, C₇₋₂₀ alkylaryl, or C₇₋₂₀ arylalkyl,
X¹ and X² are the same or different from each other, and are each independently halogen, and
Q¹ and Q² are the same as or different from each other, and are each independently C₁₋₂₀ alkyl; provided the following two compounds are excluded:

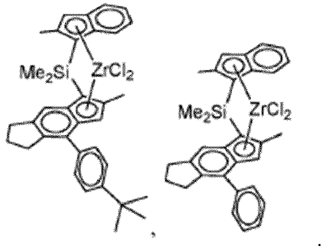

In addition, the present disclosure provides a catalyst composition comprising the above-mentioned transition metal compound.

The present disclosure also provides a method for preparing polyethylene, comprising a step of copolymerizing ethylene and alpha-olefin in the presence of the catalyst composition.

A further aspect of the present disclosure provides polyethylene obtained by the above preparation method.

Terms used herein are only for explaining specific exemplary embodiments, and are not intended to limit the present disclosure.

The singular expression may include the plural expression unless it is differently expressed contextually.

As used herein, the terms "comprise", "include", or "have" designate that stated characteristics, numbers, steps, constitutional elements or combinations thereof are exist, but it should be understood that they do not previously exclude the possibility of existence or addition of one or more other characteristics, numbers, steps, constitutional elements or combinations thereof.

Further, as used herein, in case a layer or an element is mentioned to be formed "on" layers or elements, it means that the layer or element is directly formed on the layers or elements, or it means that other layers or elements may be additionally formed between the layers, on a subject, or on a substrate.

As used herein, the (co)polymer is meant to include both a homo-polymer and a copolymer (co-polymer).

As used herein, when a definition is not otherwise provided, the "copolymerization" may refer to a block copolymerization, random copolymerization, graft copolymerization, or alternating copolymerization, and the term "copolymer" may refer to a block copolymer, random copolymer, graft copolymer, or alternating copolymer.

Hereinafter, the present disclosure will be described in detail.

According to one aspect of the present disclosure, there is provided a transition metal compound represented by the following Chemical Formula 1. 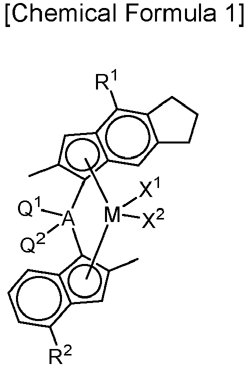 wherein in Chemical Formula 1,
A is a Group 14 element,
M is a Group 4 transition metal,
R¹ and R² are the same as or different from each other, and are each independently hydrogen, C₁₋₂₀ alkyl, C₂₋₂₀ alkenyl, C₁₋₂₀ alkylsilyl, C₁₋₂₀ silylalkyl, C₁₋₂₀ alkoxysilyl, C₁₋₂₀ alkoxy, C₆₋₂₀ aryl, C₇₋₂₀ alkylaryl, or C₇₋₂₀ arylalkyl,
X¹ and X² are the same or different from each other, and are each independently halogen, and
Q¹ and Q² are the same as or different from each other, and are each independently C₁₋₂₀ alkyl; provided the following two compounds are excluded:

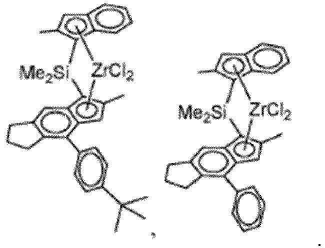

Specifically, the compound represented by Chemical Formula 1 is a compound having an asymmetric structure in which an indacene ligand and an indene ligand including a specific substituent are bonded by a specific bridge group. The compound is characterized in that a methyl group is substituted at position 2 of indacene ligand and indene ligand, and only an alkyl group is bonded to the substituted bridge group. In particular, the compound is a compound having a symmetric structure in which the same ligand is bridged, but compared to a compound in which a bulky substituent other than a methyl group is bonded to a ligand, or a compound with a substituent including a hetero atom such as oxygen in a bridge group, it not only exhibits excellent process stability and high polymerization activity in the ethylene polymerization reaction, but also significantly increases the intramolecular short chain branch (SCB) content and changes the molecular structure and distribution, and thus, can be effectively applied to a catalyst for preparing polyethylene having excellent morphology, excellent mechanical properties and enhanced durability.

As used herein, "racemic form" or "racemate" or "racemic isomer" means a form in which the same substituents on the two indenyl and indacenyl moieties are positioned on a plane containing a transition metal represented by M in Chemical Formula 1, for example, a transition metal such as zirconium (Zr) or hafnium (Hf) and are positioned at mutually opposite sides with respect to the center of the indenyl and indacenyl moieties.

And, as used herein, the term "meso form" or "meso isomer" is a stereoisomer of the above-mentioned racemic isomer, and means a form in which the same substituents on the two indenyl and indacenyl moieties are positioned on a plane containing a transition metal represented by M in Chemical Formula 1, for example, a transition metal such as zirconium (Zr) or hafnium (Hf), and positioned on the same side with respect to the center of the indenyl and indacenyl moieties.

Further, unless otherwise specified herein, the following terms may be defined as follows.

A halogen may be fluorine (F), chlorine (Cl), bromine (Br), or iodine (I).

An alkyl having 1 to 20 carbon atoms (C₁₋₂₀) may be a straight-chain, branched or cyclic alkyl. Specifically, the alkyl having 1 to 20 carbon atoms may be a straight-chain alkyl having 1 to 20 carbon atoms; a straight-chain alkyl having 1 to 15 carbon atoms; a straight-chain alkyl having 1 to 5 carbon atoms; a branched or cyclic alkyl having 3 to 20 carbon atoms; a branched or cyclic alkyl having 3 to 15 carbon atoms; or a branched or cyclic alkyl having 3 to 10 carbon atoms. In one example, the alkyl having 1 to 20 carbon atoms (C₁₋₂₀) includes methyl, ethyl, propyl, isopropyl, n-butyl, tert-butyl, pentyl, hexyl, heptyl, octyl, cyclopropyl, cyclobutyl, cyclopentyl, cyclohexyl, cycloheptyl, and cyclooctyl.

An alkenyl having 2 to 20 carbon atoms (C₂₋₂₀) includes a straight-chain or branched alkenyl, and specifically, it may include allyl, ethenyl, propenyl, and butenyl, pentenyl.

An alkoxy having 1 to 20 carbon atoms (C₁₋₂₀) may include a methoxy group, ethoxy, isopropoxy, n-butoxy, tert-butoxy, and cyclohexyloxy group.

An alkoxyalkyl group having 2 to 20 carbon atoms (C₂₋₂₀) is a functional group in which one or more hydrogens of the above-mentioned alkyl are substituted with alkoxy, and specifically, it may include alkoxyalkyl such as methoxymethyl, methoxyethyl, ethoxymethyl, iso-propoxymethyl, iso-propoxyethyl, iso-propoxypropyl, iso-propoxyhexyl, tert-butoxymethyl, tert-butoxyethyl, tert-butoxypropyl, and tert-butoxyhexyl.

An aryloxy having 6 to 40 carbon atoms (C₆₋₄₀) may include phenoxy, biphenoxyl, and naphthoxy.

An aryloxyalkyl group having 7 to 40 carbon atoms (C₇₋₄₀) is a functional group in which one or more hydrogens of the above-mentioned alkyl are substituted with aryloxy, and specifically, it may include phenoxymethyl, phenoxyethyl, and phenoxyhexyl.

An alkylsilyl having 1 to 20 carbon atoms (C₁₋₂₀) or an alkoxysilyl group having 1 to 20 carbon atoms (C₁₋₂₀) is a functional group in which 1 to 3 hydrogens of -SiHs are substituted with 1 to 3 alkyls or alkoxy as described above, and specifically, it may include alkylsilyl such as methylsilyl, dimethylsilyl, trimethylsilyl, dimethylethylsilyl, diethylmethylsilyl group or dimethylpropylsilyl; alkoxysilyl such as methoxysilyl, dimethoxysilyl, trimethoxysilyl or dimethoxyethoxysilyl; alkoxyalkylsilyl such as methoxydimethylsilyl, diethoxymethylsilyl or dimethoxypropylsilyl, but the present disclosure is not limited thereto.

A silylalkyl having 1 to 20 carbon atoms (C₁₋₂₀) is a functional group in which one or more hydrogens of the alkyl as described above are substituted with silyl, and specifically, it may include -CH₂-SiH₃, methylsilylmethyl or dimethylethoxysilylpropyl, but the present disclosure is not limited thereto.

Further, an alkylene having 1 to 20 carbon atoms (C₁₋₂₀) is identical to the above-mentioned alkyl except that it is a divalent substituent, and specifically, it may include methylene, ethylene, propylene, butylene, pentylene, hexylene, heptylene, octylene, cyclopropylene, cyclobutylene, cyclopentylene, cyclohexylene, cycloheptylene, and cyclooctylene.

An aryl having 6 to 20 carbon atoms (C₆₋₂₀) may be a monocyclic, bicyclic or tricyclic aromatic hydrocarbon. In one example, the aryl having 6 to 20 carbon atoms (C₆₋₂₀) may include phenyl, biphenyl, naphthyl, anthracenyl, phenanthrenyl, and fluorenyl.

An alkylaryl having 7 to 20 carbon atoms (C₇₋₂₀) may mean a substituent in which one or more hydrogens among hydrogens of an aromatic ring are substituted with the above-mentioned alkyl. In one example, the alkylaryl having 7 to 20 carbon atoms (C₇₋₂₀) may include methylphenyl, ethylphenyl, methylbiphenyl, and methylnaphthyl.

An arylalkyl having 7 to 20 carbon atoms (C₇₋₂₀) may mean a substituent in which one or more hydrogens of the above-mentioned alkyl are substituted with the above-mentioned aryl. In one example, the arylalkyl having 7 to 20 carbon atoms (C₇₋₂₀) may include phenylmethyl, phenylethyl, biphenylmethyl, and naphthylmethyl.

Further, an arylene having 6 to 20 carbon atoms (C₆₋₂₀) is identical to the above-mentioned aryl except that it is a divalent substituent, and specifically, it may include phenylene, biphenylene, naphthylene, anthracenylene, phenanthrenylene, and fluorenylene,.

And, the Group 4 transition metal may be titanium (Ti), zirconium (Zr), hafnium (Hf), or rutherpodium (Rf), specifically, titanium (Ti), zirconium (Zr), or hafnium (Hf), and more specifically, zirconium (Zr), or hafnium (Hf.

Further, the Group 13 element may be boron (B), aluminum (Al), gallium (Ga), indium (In), or thallium (Tl), and specifically, boron (B) or aluminum (Al).

The above-mentioned substituents may be optionally substituted with one or more substituents selected from the group consisting of hydroxyl group; halogen; alkyl or alkenyl, aryl, alkoxy; alkyl or alkenyl, aryl, alkoxy containing one or more heteroatoms among the heteroatoms of Groups 14 to 16; silyl; alkylsilyl or alkoxysilyl; phosphine group; phosphide group; sulfonate group; and sulfonyl groups, within the range that exerts the same or similar effects as the desired effect.

For reference, the "part by weight" as used herein refers to a relative concept of a ratio of the weight of the remaining material based on the weight of a specific material. For example, in a mixture containing 50 g of material A, 20 g of material B, and 30 g of material C, the amounts of material B and C based on 100 parts by weight of material A are 40 parts by weight and 60 parts by weight, respectively.

On the other hand, "wt % (% by weight)" refers to an absolute concept of expressing the weight of a specific material in percentage based on the total weight. In the above-mentioned mixture, the contents of material A, B and C based on 100% of the total weight of the mixture are 50%, 20% and 30% by weight, respectively.

Specifically, in Chemical Formula 1, A may be carbon, silicon, or germanium, preferably silicon.

In Chemical Formula 1, M may be zirconium (Zr) or hafnium (Hf), preferably zirconium (Zr).

In particular, the transition metal compound has a structure in which a methyl group is substituted at a specific position of the indacene ligand and the indene ligand, that is, at the position 2, whereby it not only exhibits excellent process stability and high polymerization activity when applied as a catalyst to the ethylene polymerization process, but also significantly increases the intramolecular short chain branch (SCB) content and changes the molecular structure and distribution, and thus, realizes an excellent morphology in which the resulting polymer is scattered like sand grains and the grains maintain their original shape, together with excellent mechanical properties

Further, the transition metal compound includes substituents R¹ and R² at a specific position other than the methyl group in the indacene ligand and the indene ligand, that is, at position 4 of the indacene ligand and the indene ligand.

Specifically, R¹ and R² may each be hydrogen, phenyl, or phenyl substituted with C₁₋₆ straight-chain or branched alkyl. In one example, R¹ and R² may each be hydrogen, phenyl, or phenyl substituted with C₁₋₄ straight-chain or branched alkyl, and preferably it may be hydrogen, phenyl, or phenyl substituted with tert-butyl.

In one example, the transition metal compound may be represented by the following Chemical Formula 1-1. 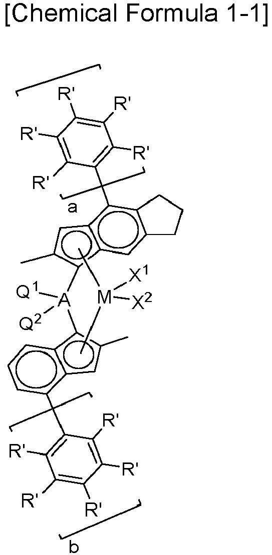
wherein in Chemical Formula 1-1, A, M, X¹, X², Q¹, and Q² are as defined in Chemical Formula 1,
R' is the same as or different from each other, and are each independently hydrogen or C₁₋₆ straight-chain or branched alkyl; and
a and b are each independently 0 or 1.

Further, in Chemical Formula 1-1, at least one of R' may be C₃₋₆ branched alkyl, and the remaining R' may be hydrogen. Specifically, R' may be hydrogen or tert-butyl.

Further, in Chemical Formula 1-1, when a and b are 0, it represents the case where hydrogen is substituted.

Meanwhile, in Chemical Formula 1 and Chemical Formula 1-1, X¹ and X² are each halogen, and specifically, it may be chlorine, iodine, or bromine, preferably chlorine.

Further, in Chemical Formula 1 and Chemical Formula 1-1, Q¹ and Q² are the same as or different from each other, and are each independently a C₁₋₆ straight-chain or branched alkyl, a C₁₋₄ straight-chain or branched alkyl, or a C₁₋₃ straight-chain or branched alkyl. In particular, Q₁ and Q₂ may be each independently a C₁₋₆ straight-chain alkyl, a C₁₋₄ straight-chain alkyl, or a C₁₋₃ straight-chain alkyl. In one example, Q₁ and Q₂ may be each independently methyl, ethyl, n-propyl, isopropyl, n-butyl, isobutyl, or tert-butyl, and preferably it may be methyl, ethyl, or n-propyl.

In particular, in the transition metal compound of the present disclosure, the substituents Q¹ and Q² contained in the bridge group consist of an alkyl group, not a substituent containing a hetero atom such as oxygen, and thus, it is possible to secure excellent process stability in which a fouling phenomenon is not observed in the ethylene polymerization reaction.

In addition, the compound represented by Chemical Formula 1 may be, more preferably, any one of the compounds represented by the following structural formulas.

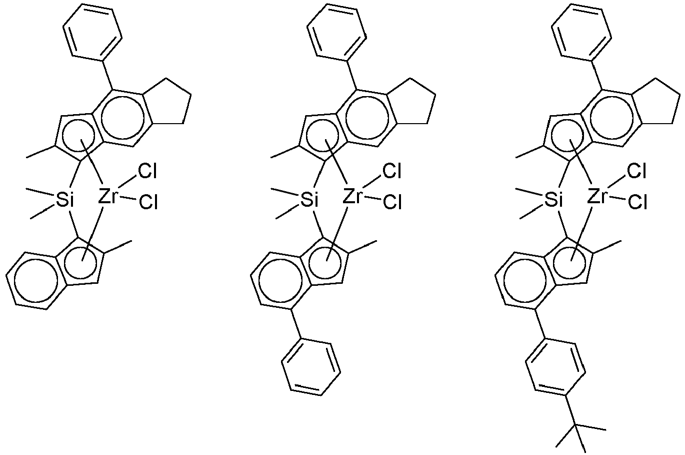

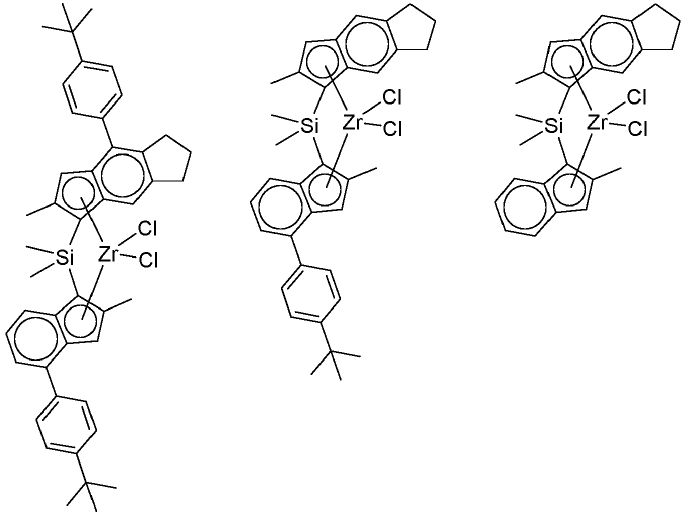

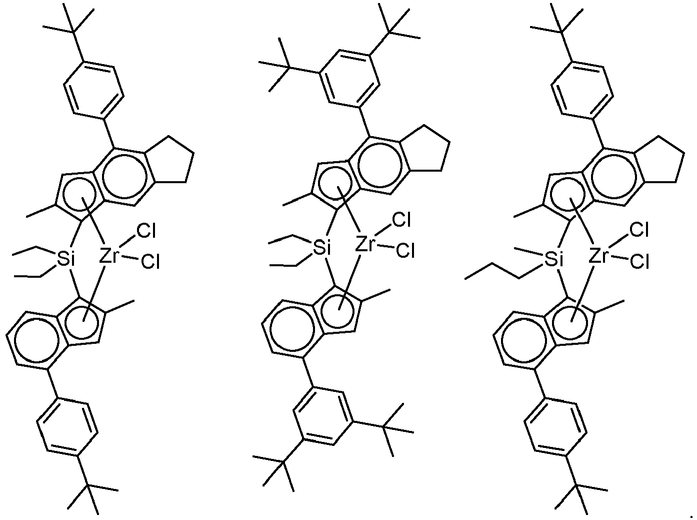

The structural formula is merely an example for explaining the present disclosure, and the present disclosure is not limited thereto.

And, a series of reactions for preparing the ligand compound and the transition metal compound are shown in Reaction Scheme 1 below. However, the Reaction Scheme is merely an example for explaining the present disclosure, and the present disclosure is not necessarily limited thereto.

Referring to Reaction Scheme 1 below, the transition metal compound according to an embodiment of the present disclosure may be prepared by a method comprising:
a step of reacting a 2-methylindenyl compound (Compound 1) in which R² is substituted, with a halogenated silane compound in which Q¹ and Q² are substituted, to prepare a 2-methylindenyl compound (Compound 2) in which a bridge group containing a Group 14 element A is connected (Step 1);
a step of reacting a 2-methylindenyl compound (Compound 2) to which a bridge containing the Group 14 element A is connected, with an indacene compound in which R¹ is substituted, to prepare a ligand compound (Compound 3) in which 2-methylindenyl and indacenyl are connected by a bridge group containing a Group 14 element A (Step 2);
and a step of reacting the ligand compound (Compound 3) with a halogen salt (metal halide) of a Group 4 transition metal in which the halogen elements X¹ and X² are substituted for the Group 4 transition metal M, to prepare a transition metal compound of Chemical Formula 1 (Compound 4) (Step 3).

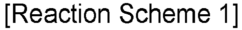

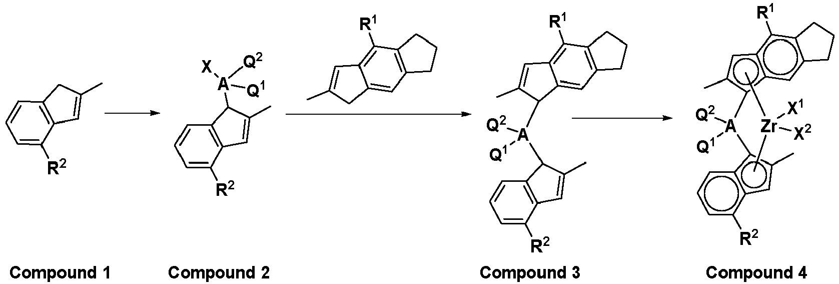

In Reaction Scheme 1, each substituent is as defined above, and X is a halogen element, and for example, it may be chlorine, iodine, bromine, preferably chlorine. And, the reaction in each step can be carried out by applying a known reaction, and for a more detailed synthesis method, refer to Examples described later.

Specifically, the method for preparing the transition metal compound according to an embodiment of the present disclosure includes:
a step of reacting a precursor compound (Compound 1) having methyl and R² which are specific substituents at the positions 2 and 4, respectively, such as 2-methylindenyl, with a bridge group-providing compound, such as halogenated silanes in the presence of alkyl lithium such as n-butyl lithium (n-BuLi), to prepare a 2-methylindenyl compound (Compound 2) to which a bridge containing a Group 14 element A such as silicon is bonded (Step 1);
a step of reacting a 2-methylindenyl compound (Compound 2) to which the silicon bridge is bonded (Compound 2) with an indacenyl compound having methyl and R¹ which are specific substituents at positions 2 and 4, respectively, in the presence of an alkyl lithium such as n-butyl lithium (n-BuLi) and a CuCN catalyst, to prepare a ligand compound (Compound 3) in which a 2-methyl indenyl structure and a 2-methyl indacenyl structure are connected by a bridge group containing a Group 14 element A such as silicon as described above (Step 2); and
a step of reacting the ligand compound (Compound 3) with a halogen salt (metal halide) of a Group 4 transition metal such as ZrCl₄ to prepare a transition metal compound of Chemical Formula 1 (Compound 4) (Step 3).

Meanwhile, according to another aspect of the present disclosure, a catalyst composition comprising the above-mentioned transition metal compound is provided.

Specifically, the catalyst composition according to an embodiment of the present disclosure may include the transition metal compound of Chemical Formula 1 as a single catalyst.

At this time, the catalyst composition may include the transition metal compound as a single catalyst component, and for example, it may be in the form of a supported metallocene catalyst containing the transition metal compound and a support. When using a supported metallocene catalyst, the produced polyethylene is excellent in the morphology and physical properties, and thus, can be suitably used for a conventional slurry polymerization, bulk polymerization, or gas phase polymerization process.

Specifically, as the support, a support having a hydroxyl group, a silanol group, or a siloxane group having a high surface reactivity may be used, and for this purpose, a support whose surface has been modified by calcination or a support whose surface has been dehydrated by drying can be used. For example, silica prepared by calcining silica gel, silica, silica-alumina or silica-magnesia, which are dried at high temperature, can be used, and they may typically contain oxide, carbonate, sulfate, and nitrate components such as Na₂O, K₂CO₃, BaSO₄, and Mg(NO₃)₂.

The calcination or drying temperature of the support may be from 200°C to 600°C, or from 250°C to 600°C. When the calcination or drying temperature of the support is low, the amount of water moisture remaining on the support is so great that the water is likely to react with a co-catalyst. In addition, the cocatalyst supporting rate may be relatively high due to the hydroxyl groups present in excess, which requires a large amount of cocatalyst. In addition, when the drying or calcining temperature is too high, pores on the surface of the support may be joined to reduce the surface area, and many hydroxyl groups or silanol groups are lost on the surface to leave only siloxane groups, so that reaction sites with the cocatalyst are likely to decrease.

The amount of the hydroxyl group on the surface of the support is preferably 0.1 mmol/g to 10 mmol/g, more preferably 0.5 mmol/g to 5 mmol/g. The amount of the hydroxyl group on the surface of the support can be adjusted depending on the preparation method and conditions of the support, or drying conditions such as temperature, time, vacuum or spray drying.

When the amount of the hydroxy group is less than 0.1 mmol/g, the number of reaction sites where the hydroxy group reacts with the cocatalyst decreases. On the other hand, when the amount of the hydroxy group is greater than 10 mmol/g, it may be caused by moisture in addition to the hydroxyl groups present on the surface of support particles.

In one example, the amount of the hydroxyl group on the surface of the support may be 0.1 mmol/g to 10 mmol/g or 0.5 mmol/g to 5 mmol/g. The amount of the hydroxyl group on the surface of the support can be adjusted depending on the preparation method and conditions of the support or drying conditions such as temperature, time, vacuum or spray drying. When the amount of the hydroxy group is too low, the number of reaction sites where the hydroxy group reacts with the cocatalyst decreases. On the other hand, when the amount of the hydroxy group is too large, it may be caused by moisture in addition to the hydroxyl groups present on the surface of support particles.

Among the above-mentioned supports, in the case of silica, especially silica prepared by calcining silica gel, since the silica support and the functional group of the compound of Chemical Formula 1 are chemically bonded and supported, there is almost no catalyst isolated from the surface of the support during the propylene polymerization process, and as a result, it is possible to minimize fouling of the reactor wall or polymer particles agglomerated when preparing polyethylene by slurry or vapor phase polymerization.

Further, when supported on a support, the compound of Chemical Formula 1 may be supported in a content range of 10 µmol or more, or 30 µmol or more, and 100 µmol or less, or 80 µmol or less, based on the weight of the support, based on 1 g of silica. When supported within the above content range, it may exhibit an appropriate supported catalytic activity, which may be advantageous in terms of the maintenance of the catalytic activity and the economic efficiency.

And, the catalyst composition may further include one or more co-catalysts together with the above-described transition metal compound and the support.

The co-catalyst can be used without limitation as long as it is a co-catalyst used for polymerizing an olefin under a general metallocene catalyst. Such a cocatalyst allows a bond to be formed between the hydroxyl group on the support and the Group 13 transition metal. Further, since the cocatalyst exists only on the surface of the support, it prevent a fouling phenomenon, i.e., the accumulation of the polymer on walls of the reactor or aggregation between the polymer particles, and thus, can contribute to securing the unique properties of the specific hybrid catalyst composition of the present disclosure.

In addition, the catalyst composition may further include one or more cocatalysts selected from the group consisting of compounds represented by the following Chemical Formulas 2 to 4.

[Chemical Formula 2] -[Al(R²¹)-O]ₘ-

-wherein in Chemical Formula 2,
R²¹ are the same as or different from each other, and are each independently halogen, C₁₋₂₀ alkyl or C₁₋₂₀ haloalkyl; and
m is an integer of 2 or more;

[Chemical Formula 3] J(R³¹)₃

wherein in Chemical Formula 3,
R³¹ are the same as or different from each other, and are each independently halogen, C₁₋₂₀ alkyl or C₁₋₂₀ haloalkyl; and
J is aluminum or boron;

[Chemical Formula 4] [E-H]⁺[ZQ₄]⁻ or [E]⁺[ZQ₄]⁻

wherein in Chemical Formula 4,
E is a neutral or cationic Lewis base, [E-H]⁺ and [E]⁺ are each a Bronsted acid;
H is a hydrogen atom;
Z is a Group 13 element;
Q are the same as or different from each other, and are each independently C₆₋₂₀ aryl or C₁₋₂₀ alkyl, wherein said C₆₋₂₀ aryl or C₁₋₂₀ alkyl is unsubstituted or substituted with one or more substituents selected from the group consisting of halogen, C₁₋₂₀ alkyl, C₁₋₂₀ alkoxy and C₆₋₂₀ phenoxy.

As used herein, the hydrocarbyl group is a monovalent functional group in which a hydrogen atom is removed from a hydrocarbon, and may include an alkyl group, an alkenyl group, an alkynyl group, an aryl group, an aralkyl group, an aralkenyl group, an aralkynyl group, an alkylaryl group, an alkenylaryl group, and alkynylaryl group. And, the hydrocarbyl group having 1 to 30 carbon atoms may be a hydrocarbyl group having 1 to 20 carbon atoms or 1 to 10 carbon atoms. In one example, the hydrocarbyl group may be a straight-chain, branched or cyclic alkyl group. More specifically, the hydrocarbyl group having 1 to 30 carbon atoms may be a straight-chain, branched or cyclic alkyl group such as a methyl group, an ethyl group, an n-propyl group, an iso-propyl group, an n-butyl group, an iso-butyl group, a tert-butyl group, an n-pentyl group, an n-hexyl group, an n-heptyl group or cyclohexyl group; or an aryl group such as phenyl, biphenyl, naphthyl, anthracenyl, phenanthrenyl, or fluorenyl. Further, it may be an alkylaryl such as methylphenyl, ethylphenyl, methylbiphenyl, methylnaphthyl, and may also be an arylalkyl such as phenylmethyl, phenylethyl, biphenylmethyl, or naphthylmethyl. In addition, it may be an alkenyl such as allyl, ethenyl, propenyl, butenyl, or pentenyl.

The compound represented by Chemical Formula 2 may be, for example, an alkylaluminoxane such as modified methylaluminoxane (MMAO), methylaluminoxane (MAO), ethylaluminoxane, isobutylaluminoxane, or butylaluminoxane.

The alkyl metal compound represented by Chemical Formula 3 may be, for example, trimethylaluninum, triethylaluminum, triisobutylaluninum, tripropylaluminum, tributylaluminum, dimethylchloroalminum, dimethylisobutylaluminum, dimethylethylaluminum, diethylchloroaluminum, triisopropylaluminum, tri-s-butylaluminum, tricyclopentylaluminum, tripentylaluminum, triisopentylaluminum, trihexylaluminum, ethyldimethylaluminum, methyldiethylaluminum, triphenylaluminum, tri-p-tollylaluminum, dimethylaluminummethoxide, dimethylaluminumethoxide, trimethylboron, triethylboron, triisobutylboron, tripropylboron, or tributylboron.

The compound represented by Chemical Formula 4 may be, for example, triethylammoniumtetraphenylboron, tributylammoniumtetraphenylboron, trimethylammoniumtetraphenylboron, tripropylammoniumtetraphenylboron, trimethylammoniumtetra(p-tolyl)boron, tripropylammoniumtetra(p-tolyl)boron, triethylammoniumtetra(o,p-dimethylphenyl)boron, trimethylammononiumtetra(o,p-dimethylphenyl)boron, tributylammoniumtetra(p-trifluoromethylphenyl)boron, trimethylammoniumtetra(p-trifluoromethylphenyl)boron, tributylammoniumtetrapentafluorophenylboron, N,N-diethylaniliniumtetraphenylboron, N,N-diethylaniliniumtetraphenylboron, N,N-diethylaniliniumtetrapentafluorophenylboron, diethylmmoniumtetrapentafluorophenylboron, triphenylphosphoniumtetraphenylboron, trimethylphosphoniuntetraphenylboron, triethylammoniumtetraphenylaluminum, tributylammoniumtetraphenylaluminum, trimethylammniumtetraphenylaluminum, tripropylammoniumtetraphenylaluminum, trimethylammoniumtetra(p-tolyl)aluminum, tripropylammoniumtetra(p-tolyl)aluminum, triethylammoniumtetra(o,p-dimethylphenyl)aluminum, tribulylammoniumtetra(p-trifluoromethylphenyl)aluminum, trimethylammoniumtetra(p-trifluoromethylphenyl)aluminum, tributylammoniumtetrapentafluorophenylaluminum, N,N-diethylaniliniumtetraphenylaluminum, N,N-diethylaniliniumtetrapentafluorophenylaluminum, diethylammoniumtetrapentafluorophenylaluminum, triphenylphosphoniumtetraphenylaluminum, trimethylphosphoniumtetraphenylaluminum, triphenylphosphoniumtetraphenylboron, triphenylcarboniumtetraphenylboron, triphenylcarboniumtetraphenylaluminum, triphenylcarboniumtetra(p-trifluoromethylphenyl)boron, or triphenylcarboniumtetrapentafluorophenylboron.

Further, the catalyst composition may include the cocatalyst and the metallocene compound of Chemical Formula 1 in a molar ratio of 1:1 to 1:10000, respectively, preferably, in a molar ratio of 1:1 to 1:1000, and more preferably, in a molar ratio of 1:10 to 1:100. At this time, if the molar ratio is less than 1, the metal content of the cocatalyst is too small and a catalyst active species is not well formed, so that the activity may be lowered. When the molar ratio exceeds 10000, there is a fear that the metal of the cocatalyst can rather act as a catalyst poison.

The supported amount of the cocatalyst may be from 3 mmol to 25 mmol, or from 5 mmol to 20 mmol, based on 1 g of the support.

On the other hand, the catalyst composition can be prepared by the preparation method comprising a step of supporting a cocatalyst on a support; supporting a metallocene compound on the support on which the cocatalyst is supported; and a support on which the cocatalyst and the metallocene compound are supported.

In the above method, the supporting conditions are not particularly limited, and the supporting step may be carried out within a range that is well-known to those skilled in the art. For example, the supporting step may be appropriately carried out at a high temperature and at a low temperature. For example, the supporting temperature may be in a range of -30°C to 150°C, preferably in a range of 50°C to 98°C or 55°C to 95°C. The supporting time may be appropriately adjusted depending on the amount of the first metallocene compounds to be supported. The reacted supported catalyst may be used without further treatment, after the reaction solvent is removed through filtration or distillation under reduced pressure, or subjected to Soxhlet filtering using an aromatic hydrocarbon such as toluene, if necessary.

Further, the preparation of the supported catalyst may be carried out in the presence of a solvent or without a solvent. When the solvent is used, it may include aliphatic hydrocarbon solvents such as hexane or pentane, aromatic hydrocarbon solvents such as toluene or benzene, chlorinated hydrocarbon solvents such as dichloromethane, ether solvents such as diethylether or THF, and common organic solvents such as acetone or ethyl acetate. Preferred are hexane, heptane, toluene and dichloromethane.

Further, the catalyst composition may further include at least one antistatic agent represented by the following Chemical Formula 5:

[Chemical Formula 5] R⁵¹N-(CH₂CH₂OH)₂

wherein in Chemical Formula 5,
R⁵¹ is C₈₋₃₀ straight-chain alkyl.

Specifically, in Chemical Formula 5, R⁵¹ is C₈₋₃₀ alkyl, and when R⁵¹ contains an alkyl group having a carbon number in the above range, it does not induce an unpleasant odor and can exhibit an effect of reducing fine powders through an excellent antistatic action.

More specifically, the hydroxyethyl-substituted alkylamine may be a compound in which in Chemical Formula 5, R⁵¹ is a C₈₋₂₂ straight-chain alkyl, or a C₁₂₋₁₈ straight-chain alkyl, or a C₁₃₋₁₅ straight-chain alkyl, and one kind alone or a mixture of two or more kinds of these compounds may be used. In addition, commercially available products such as N,N-bis(2-hydroxyethyl)pentadecylamine (Atmer 163^{™}, manufactured by CRODA) can be used.

Further, when an antistatic agent is further included, it may be included in an amount of 1 g to 10 g, more specifically 1 g to 5 g, based on 100 g of the support.

When the catalyst composition includes all of the above-mentioned support, co-catalyst and antistatic agent, the catalyst composition can be prepared by a method comprising: a step of supporting a cocatalyst on a support; a step of supporting a transition metal compound on the support on which the cocatalyst is supported; and a step of adding an antistatic agent in a solution or suspension state to the support on which the cocatalyst and the transition metal compound are supported. As described above, the catalyst composition having a structure in which a cocatalyst, a transition metal compound, and an antistatic agent are supported in this order on a support may exhibit excellent process stability together with high catalytic activity in the polypropylene preparation process.

On the other hand, the present disclosure provides a method for preparing polyethylene, comprising a step of copolymerizing ethylene and alpha-olefin in the presence of the catalyst composition.

The above-mentioned catalyst composition can exhibit excellent supporting performance, catalytic activity and high copolymerizability, and even if a low-density polyethylene is produced in a slurry process in the presence of such a catalyst composition, it is possible to prevent traditional productivity loss and fouling problems, and improve process stability.

The method for preparing polyethylene can be carried out by a slurry polymerization process using ethylene and alpha-olefin as raw materials in the presence of the above-mentioned catalyst composition and applying a conventional apparatus and contacting technique.

The method for preparing polyethylene may be carried out by copolymerizing ethylene and alpha-olefin using a continuous slurry polymerization reactor, or a loop slurry reactor.

Specifically, the copolymerization step can be carried out by reacting an alpha-olefin in an amount of 0.45 mol or less or from 0.1 mol to 0.45 mol, or 0.4 mol or less or from 0.2 mol to 0.4 mol, or 0.35 mol or less or from 0.25 mol to 0.35 mol, based on 1 mol of ethylene.

The method for preparing polyethylene does not require an increase in the comonomer content for reducing the density of a prepared product, and therefore has the feature that the process is stable and the high dart falling impact strength of the product can be reproduced.

Further, the alpha-olefin may be at least one selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicosene, and mixtures thereof.

Specifically, in the production method of the polyethylene, for example, 1-hexene can be used as the alpha-olefin.

And, the polymerization temperature may be from 25°C to 500°C, or from 25°C to 300°C, or from 30°C to 200°C, or from 50°C to 150°C, or from 60°C to 120°C. Further, the polymerization pressure may be from 1 kgf /cm² to 100 kgf /cm², or from 1 kgf/cm² to 50 kgf/cm², or from 5 kgf/cm² to 45 kgf/cm², or from 10 kgf/cm² to 40 kgf/cm², or from 15 kgf/cm² to 35 Kgf/ cm² (wherein 1 Kgf/cm² = 98.06 kPa).

The catalyst composition including the transition metal compound of Chemical Formula 1 according to the present disclosure can be dissolved or diluted in an aliphatic hydrocarbon solvent having 5 to 12 carbon atoms, for example, pentane, hexane, heptane, nonane, decane, and an isomer thereof, an aromatic hydrocarbon solvent such as toluene and benzene, or a hydrocarbon solvent substituted with a chlorine atom, such as dichloromethane or chlorobenzene, and injected. The solvent used here is preferably used after removing a small amount of water or air, which acts as a catalyst poison, by treating with a small amount of alkyl aluminum. It is also possible to further use a cocatalyst.

In one example, the polymerization step may be carried out by introducing hydrogen gas in an amount of 800 ppm or less or from 0 to 800 ppm, or 300 ppm or less or from 10 ppm to 300 ppm, or 100 ppm or less or from 15 ppm to 100 ppm, based on the ethylene content.

In this ethylene copolymerization process, the catalyst composition including the transition metal compound of the present disclosure can exhibit high catalytic activity. In one example, when ethylene copolymerization catalyst activity may be 4.0 kg PE /g.cat.hr or more or from 4.0 kg PE /g.cat.hr to 50 kg PE /g.cat.hr, when calculated as a ratio of the weight (kg PE) of polyethylene produced per mass (g) of the catalyst composition used based on the unit time (h). Specifically, the activity of the catalyst composition may be 4.2 kg PE /g·cat·hr or more, or 4.3 kg PE /g·cat·hr or more, or 4.5 kg PE/g·cat·hr or more, or 40 kg PE /g·cat·hr or less, or 30 kg PE /g·cat·hr or less, or 15 kg PE /g·cat·hr or less.

In particular, when copolymerizing ethylene and alpha-olefin using the catalyst composition containing the transition metal compound of Chemical Formula 1 according to the present disclosure, it exhibits higher comonomer binding properties than before, and even if the comonomer of the alpha-olefin is used in the same amount, a copolymer having a high comonomer content can be produced with higher activity. This makes it possible to produce a product having a higher comonomer content than a product having an equivalent melting point (Tm) or density, that is, a product having a high short chain branch (SCB) content. At this time, the term "short chain branch (SCB)" means branches having 2 to 7 carbons attached to the main chain. Usually, it means side chain branches formed when an alpha-olefin having 4 or more carbon atoms, such as 1-butene, 1-hexene, 1-octene, is used as a comonomer.

As described above, according to the present disclosure, polyethylene can be prepared by copolymerizing ethylene and alpha-olefin using the catalyst composition containing the transition metal compound of Chemical Formula 1 described above.

At this time, the polyethylene produced may be an ethylene 1-hexene copolymer.

The method for preparing polyethylene can be carried out by slurry polymerization in the presence of the above-mentioned catalyst composition, thereby providing polyethylene having excellent mechanical properties.

In particular, the catalyst composition containing the transition metal compound of Chemical Formula 1 according to the present disclosure exhibits high activity as described above when copolymerizing ethylene and alpha-olefin, and can increase the intramolecular short chain branch (SCB) content together with a high molecular weight without excessively increasing the content of the comonomer alpha-olefin.

Meanwhile, according to another embodiment of the present disclosure, there is provided a polyethylene produced by the above-mentioned method and containing an alpha-olefin as a comonomer.

The polyethylene, that is, the polyethylene copolymer containing an alpha-olefin as a comonomer, has a weight average molecular weight of from 380000 g/mol to 650000 g/mol, or from 390000 g/mol to 630000 g/mol, or from 400000 g/mol to 580000 g/mol.

In one example, the weight average molecular weight (Mw) and the number average molecular weight (Mn) of the polyethylene can be measured using gel permeation chromatography (GPC, manufactured by Water).

Specifically, a Waters PL-GPC220 instrument may be used as the gel permeation chromatography (GPC) instrument, and a Polymer Laboratories PLgel MIX-B 300 mm length column may be used. In this case, an evaluation temperature is 160°C, and 1,2,4-trichlorobenzene is used for a solvent at a flow rate of 1 mL/min. Each polyethylene sample is pretreated by dissolving it in 1,2,4-trichlorobenzene containing 0.0125% of BHT at 160°C for 10 hours using a GPC analyzer (PL-GP220), and the sample is prepared at a concentration of 10 mg/10 mL and then supplied in an amount of 200 µL. The values of Mw and Mn may be obtained using a calibration curve formed using a polystyrene standard. 9 kinds of the polystyrene standard are used with the molecular weight of 2000 g/mol, 10000 g/mol, 30000 g/mol, 70000 g/mol, 200000 g/mol, 700000 g/mol, 2000000 g/mol, 4000000 g/mol, 10000000 g/mol.

Further, the polyethylene copolymer may have a melting point (Tm) of 115°C or more or 128°C or less, or 117°C or more or 126°C or less.

In one example, the melting point (Tm) of the polyethylene copolymer may be measured using a Differential Scanning Calorimeter (DSC).

Specifically, the polyethylene copolymer was heated to 150°C, left for 5 minutes, and the temperature was lowered to -100°C, and then increased again. At this time, the speed of a temperature rise and drop is adjusted to 10°C/min, respectively, and then the melting temperature is taken as the maximum point of the endothermic peak measured in the section where the second temperature rises.

Further, the polyethylene copolymer may have a number of short chain branches (SCB), which are branches having 2 to 7 carbon atoms per 1000 carbon atoms measured by infrared spectroscopy (FT-IR), of 4.0 or more or 10.0 or less, or 4.3 or more, or 4.5 or more, or 8.5 or less, or 7.0 or less.

In one example, the intramolecular short chain branch (SCB) content of the polyethylene copolymer can be obtained by a method of measuring the number of short chain branches (SCB) (content of branches having 2 to 7 carbon atoms per 1000 carbons) by infrared spectroscopy (FT-IR).

Specifically, the polyethylene copolymer is pretreated by dissolving it in 1,2,4-trichlorobenzene containing 0.0125% BHT at 160°C for 10 hours using PL-SP260VS, and then measured using PerkinElmer Spectrum 100 FT-IR connected with high temperature GPC (PL-GPC220) at 160°C.

In addition, the polyethylene copolymer exhibits an excellent morphology in which the finally produced powder is scattered like sand grains and the grains maintains their original shape when observed by the appearance and touch, and can be effectively applied to the gas phase polymerization reaction for the production of linear low-density polyethylene.

As described above, the polyethylene obtained according to the present disclosure can be prepared by copolymerizing ethylene and alpha-olefin using the catalyst composition containing the transition metal compound of Chemical Formula 1 described above. As a result, the polyethylene realizes high catalytic activity during ethylene copolymerization, and secures physical properties such as molecular weight, melting point, and density at the same level or higher without increasing the content of alpha-olefin, and at the same time, significantly increases intramolecular short chain branch (SCB) content and changes the molecular structure and distribution, so that an injection product with excellent mechanical properties and excellent durability can be manufactured.

### [ADVANTAGEOUS EFFECTS]

The transition metal compound of the present disclosure exhibits excellent process stability and high polymerization activity in the ethylene polymerization reaction, greatly increases the intramolecular short chain branch (SCB) content and changes the molecular structure and distribution, and is very effective in preparing polyethylene having excellent mechanical properties and enhanced durability.

### [DETAILED DESCRIPTION OF THE EMBODIMENTS]

Hereinafter, the actions and effects of the present disclosure will be described in more detail by way of specific examples invention. However, these examples are for illustrative purposes only, and the scope of the present disclosure is not limited thereby.

### <Preparation of Metallocene Compound>

### Synthesis Example 1

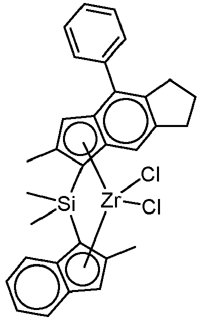

### Step 1-1. Preparation of Ligand compound (2-methyl-4-phenyl-1,5,6,7-tetrahydro-s-indacen-1-yl) dimethyl (2-methyl indene) silane

15.24 mmol of 2-methyl indene was added to a reactor, and then dried under reduced pressure for 30 minutes. 70 mL of n-hexane and 10 mL of methyl tert-butyl ether (MTBE) were added thereto, and the mixture was stirred and allowed to completely dissolve. The reactor was cooled to -25°C, and then 6.4 mL (16 mmol) of n-butyllithium (n-BuLi, 2.5 M n-hexane solution) was slowly added dropwise with stirring. The mixture was stirred at 25°C for 12 hours, and dichlorodimethyl silane (15.24 mmol) was then added thereto.

15.24 mmol of 2-methyl-4-phenyl-1,5,6,7-tetrahydro-s-indacene was added to another reactor and then dried under reduced pressure for 30 minutes. 35 mL of MTBE was added thereto, and the mixture was stirred and allowed to completely dissolve. The reactor was cooled to -25°C, and then 6.4 mL (16 mmol) of n-BuLi (2.5 M n-hexane solution) was slowly added dropwise with stirring. The mixture was stirred at 25°C for 12 hours, and then CuCN was added and allowed to react for 30 minutes.

The two reactant products prepared in this way were mixed, and then allowed to react at 25°C for 12 hours. After adding water and stirring for 1 hour, the reactor was left and then the aqueous layer was separated. Then, water and toluene were again added to the reactor, and stirred and left for 5 minutes, and then the aqueous layer was separated and removed. The organic layer was dehydrated with MgSO₄, filtered again, and added to the reactor, and then dried.

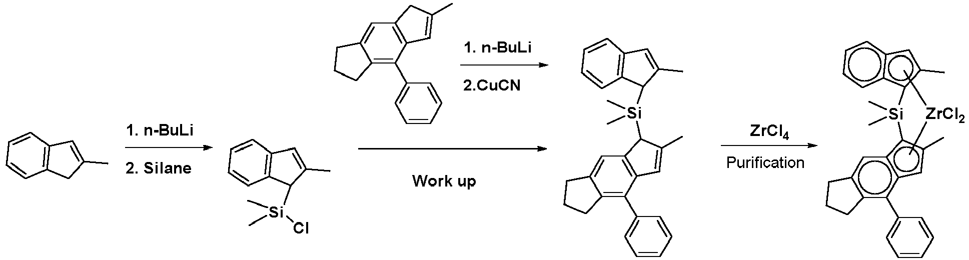

### Step 1-2. Preparation of Transition metal compound dimethyl silanediyl (2-methyl-1H-inden-1-yl)(2-methyl-4-phenyl-1,5,6,7-tetrahydro-s-indacen-1-yl) zirconium chloride

The ligand prepared in step 1-1 was dissolved in a mixed solvent (Toluene/Ether, volume ratio 10/1) of 21 mL of toluene and 2.1 mL of diethylether (Et₂O), and cooled to - 25°C, and then 12.8 mL (32 mmol) of n-BuLi (2.5 M n-hexane solution) was slowly added dropwise and stirred. Then, the mixture was stirred at 25°C for 12 hours, cooled to -20°C, and then ZrCl₄ (15.24 mmol) was mixed with toluene (0.17 M), and the resulting slurry was added thereto. Then, after stirring at 25°C for 12 hours, the solvent was completely dried and removed. The reaction mixture was filtered and dried using dichloromethane (DCM), then dichloromethane/hexane was added, and recrystallized at room temperature. Then, the resulting solid was filtered and dried in vacuo to obtain the title metallocene compound as a yellow powder (only racemic) in 20% (molar basis).

For the transition metal compound thus obtained, NMR data were measured using Bruker AVANCE III HD 500 MHz NMR/PABBO(¹H/¹⁹F/Broad band) probe: ¹H, solvent: CDCl₃.

¹H-NMR (500 MHz, CDCl₃, ppm): 0.21(s, 6H), 1.79(S, 6H), 1.95(m, 2H), 2.80(m, 4H), 6.36(s, 2H), 7.18-7.51(m, 10H).

### Synthesis Example 2

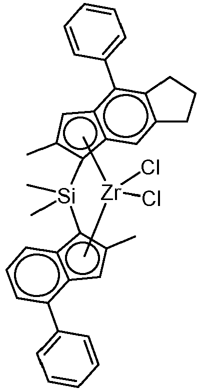

### Step 2-1. Preparation of Ligand compound, (2-methyl-4-phenyl-1,5,6,7-tetrahydro-s-indacen-1-yl) dimethyl (2-methyl-4-phenyl-indene) silane

The ligand compound (2-methyl-4-phenyl-1,5,6,7-tetrahydro-s-indacen-1-yl) dimethyl (2-methyl-4-phenyl-indene)silane was prepared in the same manner as in step 1-1 of Synthesis Example 1, except that in step 1-1 of Synthesis Example 1, 2-methyl-4-phenyl indene was used instead of 2-methyl indene as a reactant.

### Step 2-2. Preparation of Transition metal compound dimethyl silanediyl(2-methyl-4-phenyl-1,5,6,7-tetrahydro-s-indacen-1-yl)(2-methyl-4-phenyl-1H-inden-1-yl) zirconium chloride

The transition metal compound having the above structure, dimethyl silanediyl(2-methyl-4-phenyl-1,5,6,7-tetrahydro-s-indacen-1-yl)(2-methyl-4-phenyl-1H-inden-1-yl)zirconium chloride (Synthesis Example 2) was prepared in the same manner as in step 1-2 of Synthesis Example 1, except that the ligand obtained in step 2-1 was used.

¹H-NMR (500 MHz, CDCl₃, ppm): 0.22(s, 6H), 1.81(S, 6H), 1.98(m, 2H), 2.81(m, 4H), 6.35(s, 2H), 7.18-7.49(m, 13H), 8.29(d, 1H).

### Synthesis Example 3

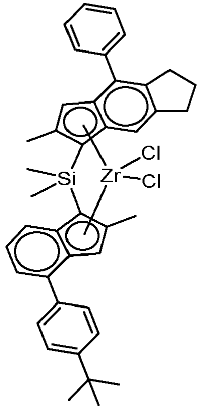

### Step 3-1. Preparation of Ligand compound (4-(4'-(tert-butyl)phenyl)-2-methyl-inden-1-yl)dimethyl(2-methyl-4-phenyl-1,5,6,7-tetrahydro-s-indacene) silane

The ligand compound (4-(4'-(tert-butyl)phenyl)-2-methyl-inden-1-yl)dimethyl(2-methyl-4-phenyl-1,5,6,7-tetrahydro-s-indacene) silane was prepared in the same manner as in step 1-1 of Synthesis Example 1, except that in step 1-1 of Synthesis Example 1, 4-(4'-(tertbutyl)phenyl)-2methyl indene was used instead of 2-methyl indene as a reactant.

### Step 3-2. Preparation of Transition metal compound dimethyl silanediyl (4-(4'-(tert-butyl)phenyl)-2-methyl-1H-inden-1-yl)(2-methyl-4-phenyl-1,5,6,7-tetrahydro-s-indacen-1-yl) zirconium chloride

The transition metal compound having the above structure, dimethyl silanediyl (4-(4'-(tert-butyl)phenyl)-2-methyl-1H-inden-1-yl)(2-methyl-4-phenyl-1,5,6,7-tetrahydro-s-indacen-1-yl) zirconium chloride (Synthesis Example 3) was prepared in the same manner as in step 1-2 of Synthesis Example 1, except that the ligand obtained in step 3-1 was used.

¹H-NMR (500 MHz, CDCl₃, ppm): 0.25(s, 6H), 1.33(s, 9H), 1.75(S, 6H), 1.81(m, 2H), 2.81 (m, 4H), 6.36(s, 2H), 7.18-7.39(m, 12H), 8.21(d, 1H).

### Synthesis Example 4

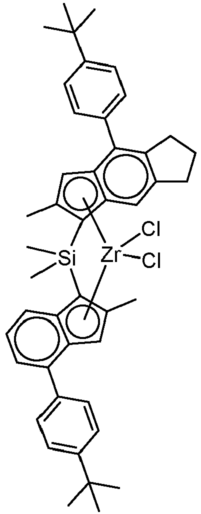

### Step 4-1. Preparation of Ligand compound (4-(4'-(tert-butyl)phenyl)-2-methyl-1,5,6,7-tetrahydro-s-indacen-1-yl)dimethyl(4-(4'-(tert-butyl)phenyl)-2-methyl indene) silane

The ligand compound (4-(4'-(tert-butyl)phenyl)-2-methyl-1,5,6,7-tetrahydro-s-indacen-1-yl)dimethyl(4-(4'-(tert-butyl)phenyl)-2-methyl indene) silane was prepared in the same manner as in step 3-1 of Synthesis Example 3, except that in step 3-1 of Synthesis Example 3, 2-methyl-4-(4'-(tert-butyl)-phenyl)-1,5,6,7-tetrahydro-s-indacene was used instead of 2-methyl-4-phenyl-1,5,6,7-tetrahydro-s-indacene as a reactant.

### Step 4-2. Preparation of Transition metal compound dimethyl silanediyl (4-(4'-(tert-butyl)phenyl)-2-methyl-1,5,6,7-tetrahydro-s-indacen-1-yl)(4-(4'-(tert-butyl)phenyl)-2-methyl-1H-inden-1-yl) zirconium chloride

The transition metal compound having the above structure, dimethyl silanediyl (4-(4'-(tert-butyl)phenyl)-2-methyl-1,5,6,7-tetrahydro-s-indacen-1-yl)(4-(4'-(tert-butyl)phenyl)-2-methyl-1H-inden-1-yl) zirconium chloride (Synthesis Example 4) was prepared in the same manner as in step 1-2 of Synthesis Example 1, except that the ligand obtained in step 4-1 was used.

¹H-NMR (500 MHz, CDCl₃, ppm): 0.22(s, 6H), 1.29 (s,18H), 1.75(S, 6H), 1.81(m, 2H), 2.81(m, 4H), 6.36(s, 2H), 7.18-7.39(m,11H), 8.21(d, 1H).

### Synthesis Example 5

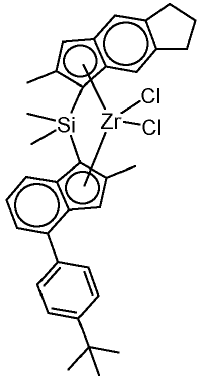

### Step 5-1. Preparation of Ligand compound (2-methyl-1,5,6,7-tetrahydro-s-indacen-1-yl)dimethyl(4-(4'-(tert-butyl)phenyl)-2-methyl indene) silane

The ligand compound 2-methyl-1,5,6,7-tetrahydro-s-indacen-1-yl)dimethyl(4-(4'-(tert-butyl)phenyl)-2-methyl indene was prepared in the same manner as in step 3-1 of Synthesis Example 3, except that in step 3-1 of Synthesis Example 3, 2-methyl-1,5,6,7-tetrahydro-s-indacene was used instead of 2-methyl-4-phenyl-1,5,6,7-tetrahydro-s-indacene as a reactant.

### Step 5-2. Preparation of Transition metal compound dimethyl silanediyl (2-methyl-1,5,6,7-tetrahydro-s-indacen-1-yl)(4-(4'-(tert-butyl)phenyl)-2-methyl-1H-inden-1-yl) zirconium chloride

The transition metal compound having the above structure, dimethyl silanediyl (2-methyl-1,5,6,7-tetrahydro-s-indacen-1-yl)(4-(4'-(tert-butyl)phenyl)-2-methyl-1H-inden-1-yl) zirconium chloride (Synthesis Example 5) was prepared in the same manner as in step 3-2 of Synthesis Example 3, except that the ligand obtained in step 5-1 was used.

¹H-NMR (500 MHz, CDCl₃, ppm): 0.22(s, 6H), 1.23 (s,9H), 1.79(S, 6H), 2.07(m, 2H), 2.85(t,4H), 6.36(s, 2H), 7.24-7.49(m, 8H), 8.29(d, 1H).

### Synthesis Example 6

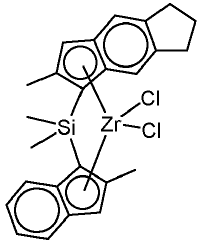

### Step 6-1. Preparation of Ligand compound (2-methyl-1,5,6,7-tetrahydro-s-indacen-1-yl) dimethyl (2-methyl indene) silane

The ligand compound (2-methyl-1,5,6,7-tetrahydro-s-indacen-1-yl) dimethyl (2-methyl indene) silane was prepared in the same manner as in step 1-1 of Synthesis Example 1, except that in step 1-1 of Synthesis Example 1, 2-methyl-1,5,6,7-tetrahydro-s-indacene was used instead of 2-methyl-4-phenyl-1,5,6,7-tetrahydro-s-indacene as a reactant.

### Step 6-2. Preparation of Transition metal compound dimethyl silanediyl (2-methyl-1H-inden-1-yl)(2-methyl-1,5,6,7-tetrahydro-s-indacen-1-yl) zirconium chloride

The transition metal compound having the above structure, dimethyl silanediyl (2-methyl-1,5,6,7-tetrahydro-s-indacen-1-yl)(2-methyl-1H-inden-1-yl) zirconium chloride (Synthesis Example 6) was prepared in the same manner as in step 1-2 of Synthesis Example 1, except that the ligand obtained in step 6-1 was used.

¹H-NMR (500 MHz, CDCl₃, ppm): 0.24(s, 6H), 1.76(S, 6H), 2.17(m, 2H), 2.89(t,4H), 6.42(s, 2H), 7.24-7.35 (m,6H).

### Synthesis Example 7

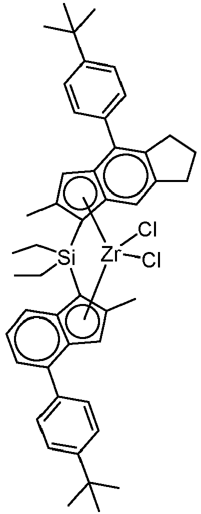

### Step 7-1. Preparation of Ligand compound (4-(4'-(tert-butyl)phenyl)-2-methyl-1,5,6,7-tetrahydro-s-indacen-1-yl)diethyl(4-(4'-(tert-butyl)phenyl)-2-methyl indene) silane

The ligand compound (4-(4'-(tert-butyl)phenyl)-2-methyl-1,5,6,7-tetrahydro-s-indacen-1-yl)diethyl(4-(4'-(tert-butyl)phenyl)-2-methyl indene) silane was prepared in the same manner as in step 4-1 of Synthesis Example 4, except that in step 4-1 of Synthesis Example 4, dichloro diethyl silane was used instead of dichloro dimethyl silane as a reactant.

### Step 7-2. Preparation of Transition metal compound diethyl silanediyl (4-(4'-(tert-butyl)phenyl)-2-methyl-1,5,6,7-tetrahydro-s-indacen-1-yl)(4-(4'-(tert-butyl)phenyl)-2-methyl-1H-inden-1-yl) zirconium chloride

The transition metal compound having the above structure, Diethyl silanediyl (4-(4'-(tert-butyl)phenyl)-2-methyl-1,5,6,7-tetrahydro-s-indacen-1-yl)(4-(4'-(tert-butyl)phenyl)-2-methyl-1H-inden-1-yl) zirconium chloride (Synthesis Example 7) was prepared in the same manner as in step 4-2 of Synthesis Example 4, except that the ligand obtained in step 7-1 was used.

¹H-NMR (500 MHz, CDCl₃, ppm): 0.66 (m, 4H), 0.94 (t, 9H), 1.33 (s, 18H), 1.79 (s, 6H), 1.95(m, 2H), 2.83(m, 4H), 3.36(s, 2H), 7.3-7.40 (m, 11H), 8.29(d, 1H).

### Synthesis Example 8

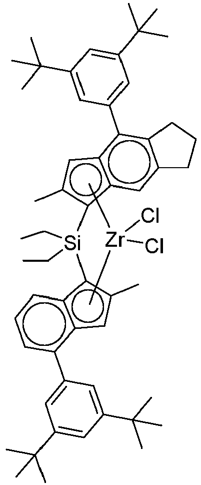

### Step 8-1. Preparation of Ligand compound (4-(3',5'-di-tert-butylphenyl)-2-methyl-1,5,6,7-tetrahydro-s-indacen-1-yl)diethyl(4-(3',5'-di-tert-butylphenyl)-2-methyl indene) silane

The ligand compound (4-(3',5'-di-tert-butylphenyl)-2-methyl-1,5,6,7-tetrahydro-s-indacen-1-yl)diethyl(4-(3',5'-di-tert-butylphenyl)-2-methyl indene) silane was prepared in the same manner as in step 7-1 of Synthesis Example 7, except that in step 7-1 of Synthesis Example 7, (4-(3',5'-di-tert-butylphenyl)-2-methyl-1,5,6,7-tetrahydro-s-indacene was used instead of 2-methyl-4-(4'-(tert-butyl)-phenyl) -1,5,6,7-tetrahydro-s-indacene as a reactant, and 4-(3',5'-di-tert-butylphenyl)-2-methyl-1H-indene was used instead of 4-(4'-(tert-butyl)phenyl)-2-methyl indene.

### Step 8-2. Preparation of Transition metal compound diethyl silanediyl (4-(3',5'-di-tert-butylphenyl)-2-methyl-1,5,6,7-tetrahydro-s-indacen-1-yl)(4-(3',5'-di-tert-butylphenyl)-2-methyl-1H-inden-1-yl) zirconium chloride

The transition metal compound having the above structure, diethyl silanediyl (4-(3',5'-di-tert-butylphenyl)-2-methyl-1,5,6,7-tetrahydro-s-indacen-1-yl)(4-(3',5'-di-tert-butylphenyl)-2-methyl-1H-inden-1-yl) zirconium chloride (Synthesis Example 8) was prepared in the same manner as in step 7-2 of Synthesis Example 7, except that the ligand obtained in step 8-1 was used.

¹H-NMR (500 MHz, CDCl₃, ppm): 0.68 (m, 4H), 0.90 (t, 9H), 1.37 (s, 36H), 1.82 (s, 6H), 1.98(m, 2H), 2.81(m, 4H), 3.36(s, 2H), 7.35 (m, 4H), 7.73 (s,4H), 8.29(d,1H).

### Synthesis Example 9

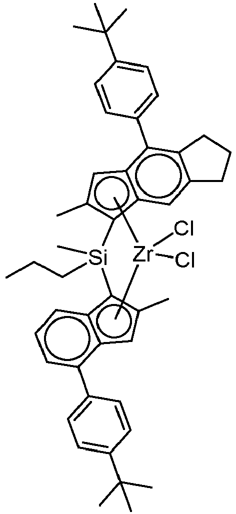

### Step 9-1. Preparation of Ligand compound (4-(4'-(tert-butyl)phenyl)-2-methyl-1,5,6,7-tetrahydro-s-indacen-1-yl)methylpropyl(4-(4'-(tert-butyl)phenyl)-2-methyl indene) silane

The ligand compound (4-(4'-(tert-butyl)phenyl)-2-methyl-1,5,6,7-tetrahydro-s-indacen-1-yl)methylpropyl(4-(4'-(tert-butyl)phenyl)-2-methyl indene) silane was prepared in the same manner as in step 4-1 of Synthesis Example 4, except that in step 4-1 of Synthesis Example 4, dichloromethylpropylsilane was used instead of dichlorodimethylsilane as a reactant.

### Step 9-2. Preparation of Transition metal compound methylpropyl silanediyl (4-(4'-(tert-butyl)phenyl)-2-methyl-1,5,6,7-tetrahydro-s-indacen-1-yl)(4-(4'-(tert-butyl)phenyl)-2-methyl-1H-inden-1-yl) zirconium chloride

The transition metal compound having the above structure, methylpropyl silanediyl (4-(4'-(tert-butyl)phenyl)-2-methyl-1,5,6,7-tetrahydro-s-indacen-1-yl)(4-(4'-(tert-butyl)phenyl)-2-methyl-1H-inden-1-yl) zirconium chloride (Synthesis Example 9) was prepared in the same manner as in step 4-2 of Synthesis Example 4, except that the ligand obtained in step 9-1 was used.

¹H-NMR (500 MHz, CDCl₃, ppm): 0.21(s, 3H), 0.60(t, 2H), 0.94(t, 3H), 1.29(m, 20H), 1.79(S, 6H), 1.94(m, 2H), 2.84(m, 4H), 6.34(s,1H), 6.36(s,1H), 7.28-7.39(m,11H), 7.91(d, 1H).

### Comparative Synthesis Example 1

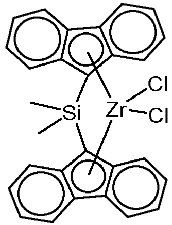

### Step 10-1. Preparation of Ligand Compound

0.83 g (5 mmol) of fluorene was added to a dried 250 mL schlenk flask, and 30 mL of diethyl ether was injected under reduced pressure. The ether solution was cooled to -78°C, the inside of the flask was replaced with argon, and 2.4 mL (6 mmol) of 2.5 M nBuLi hexane solution was slowly added dropwise. The reaction mixture was slowly raised to room temperature and stirred until the next day. Another 250 mL schlenk flask was filled with 30 mL of ether, and then 2.4 mL (20 mmol) of dichlorodimethylsilane was injected. The flask was cooled to -78°C, and then a lithiated solution of 2-hexyl-fluorene was injected thereto through a cannula. After the injection was completed, the mixture was slowly raised to room temperature, stirred for 5 hours, and then ether used as a solvent and the remaining excess dichlorodimethylsilane were removed under vacuum under reduced pressure. A dark red brown solid chloro(9H-fluoren-9-yl)dimethylsilane was obtained in the flask.

0.83 g (5 mmol) of fluorene was injected into a dried 100 mL schlenk flask and dissolved in 30 mL of ether. Then, 2.4 mL (6 mmol) of 2.5 M nBuLi hexane solution was slowly added dropwise at -78°C, and the solution was stirred for one day. The previously synthesized chloro(9H-fluoren-9-yl)dimethylsilane was dissolved in 40 mL of ether, and then a lithiated solution of fluorene was added dropwise at -78°C. The mixture was reacted overnight, and then 50 mL of water was added to the flask and quenched. The organic layer was separated and dried over MgSO₄. The mixture obtained through filtration was carried out by completely removing a solvent under vacuum and reduced pressure conditions, and then recrystallized from hexane to obtain a ligand compound.
¹H-NMR (500 MHz, CDCl₃, ppm): -0.52 (6H, s), 4.26 (2H, s), 7.29 (4H, m), 7.36 (4H, m), 7.53 (4H, m), 7.89 (4H, m)

### Step 10-2. Preparation of Transition Metal Compound

1.94 g (5 mmol) of the ligand compound synthesized in step 10-1 was added to a dry 250 mL schlenk flask, dissolved in ether, and then 4.4 mL (11 mmol) of 2.5 M nBuLi hexane solution was added and subjected to lithiation. After one day, 1.88 g (5 mmol) of ZrCl₄(THF)₂ was taken in a glove box and placed in a 250 mL schlenk flask to prepare a suspension containing ether.

After both flasks were cooled to -78°C, the lithiated ligand compound was slowly added to Zr suspension. After the injection was completed, the reaction mixture was slowly raised to room temperature. After the reaction was allowed to proceed for one day, the mixture was filtered in a filter system that was not in contact with an external air to obtain a metallocene compound.

¹H-NMR (500 MHz, CDCl₃, ppm): 1.46 (6H, s), 6.99 (4H, m), 7.29 (4H, m), 7.68 (4H, m), 7.9 (4H, m).

### Comparative Synthesis Example 2

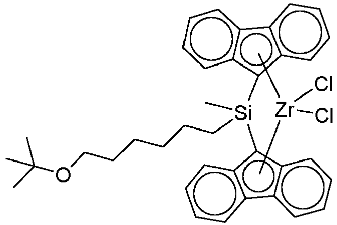

### Step 11-1. Preparation of Ligand Compound

1.0 mol of tert-Bu-O-(CH₂)₆MgCl solution as a Grignard reagent was obtained from the reaction between the compound tert-Bu-O-(CH₂)₆Cl and Mg(0) in a THF solvent. The prepared Grignard compound was added to a flask containing methyl-SiCl₃ compound (176.1 mL, 1.5 mol) and THF (2.0 mL) at -30°C, and the mixture was stirred at room temperature for at least 8 hours. The filtered solution was vacuum dried to obtain a compound of tert-Bu-O-(CH₂)₆SiMeCl₂ (yield 92%).

Fluorene (3.33 g, 20 mmol), hexane (100 mL) and MTBE (methyl tert-butyl ether, 1.2 mL, 10 mmol) were added to a reactor at -20°C, and 8ml of n-BuLi (2.5 M in Hexane) was slowly added thereto and stirred at room temperature for 6 hours to obtain a fluorenyl lithium solution. After completion of the stirring, the reactor temperature was cooled to - 30°C, and the prepared fluorenyl lithium solution was added to a solution of tert-Bu-O-(CH₂)₆SiMeCl₂ (2.7 g, 10mmol) in hexane (100 mL) at -30°C over 1 hour. After stirring at room temperature for 8 hours or more, water was added for extraction, and the mixture was evaporated and dried to obtain a compound of (tert-Bu-O-(CH₂)₆)MeSi(9-C₁₃H₁₀)₂ (5.3 g, yield: 100%).

¹H-NMR(500 MHz, CDCl₃, ppm) : -0.35 (MeSi, 3H, s), 0.26 (Si-CH₂, 2H, m), 0.58 (CH₂, 2H, m), 0.95 (CH₂, 4H, m), 1.17(tert-BuO, 9H, s), 1.29(CH₂, 2H, m), 3.21(tert-BuO-CH₂, 2H, t), 4.10(Flu-9H, 2H, s), 7.25(Flu-H, 4H, m), 7.35(Flu-H, 4H, m), 7.40(Flu-H, 4H, m), 7.85(Flu-H, 4H, d).

### Step 11-2. Preparation of Transition Metal Compound

4.8 mL of n-BuLi(2.5 M in Hexane) was slowly added to (tert-Bu-O-(CH₂)₆)MeSi(9-C1₃H₁₀)₂ (3.18 g, 6 mmol)/MTBE(20 mL) solution prepared in step 11-1 at -20°C, and the mixture was reacted for at least 8 hours while raising to room temperature to prepare a slurry solution of dilithium salts. The prepared dilithium salt slurry solution was slowly added to a slurry solution of ZrCl₄(THF)₂ (2.26 g, 6 mmol)/hexane (20 mL) at -20°C, and then further reacted at room temperature for 8 hours. The precipitate was filtered and washed several times with hexane to obtain (tert-Bu-O-(CH₂)₆)MeSi(9-C₁₃H₉)₂ZrCl₂ compound as a red solid (4.3 g, yield: 94.5%).

¹H-NMR(500 MHz, C₆D₆, ppm) : 1.15(tert-BuO, 9H, s), 1.26 (MeSi, 3H, s), 1.58 (Si-CH₂, 2H, m), 1.66 (CH₂, 4H, m), 1.91(CH₂, 4H, m), 3.32(tert-BuO-CH₂, 2H, t), 6.86 (Flu-H, 2H, t), 6.90 (Flu-H, 2H, t), 7.15 (Flu-H, 4H, m), 7.60 (Flu-H, 4H, dd), 7.64(Flu-H, 2H, d), 7.77(Flu-H, 2H, d).

### Comparative Synthesis Example 3

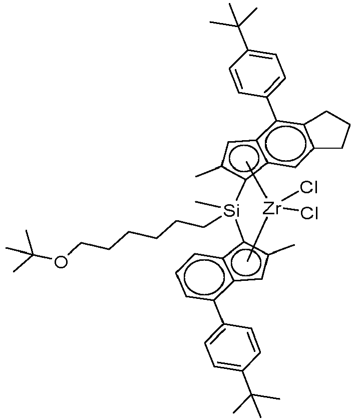

### Step 12-1. Preparation of Ligand 8-(4-(tert-butyl)phenyl)-6-methyl-1,2,3,5-tetrahydro-s-indacene

8-Bromo-6-methyl-1,2,3,5-tetrahydro-s-indacene (35 mmol, 9.8 g), *(4-(tert-*butyl)phenyl)boronic acid (70 mmol, 12.5 g), sodium carbonate (87.50 mmol, 9.3 g), and tetrakistriphenylphosphine palladium(1.80 mmol, 2 g) were added to 250 mL RBF, to which toluene (35 mL), ethanol (18 mL), and water (1 mL) were added. Then, the mixture was stirred in an oil bath preheated to 90°C for 16 hours. The extent to which the reaction proceeded was confirmed by NMR, and if the reaction was less proceeded, the reaction was further carried out for 16 hours, or the reactants excluding indacene and the solvent were additionally formulated according to the amount of the remaining indacene, and then reacted for 16 hours. When the reaction is completed, all ethanol was removed from the rotary evaporator, and worked up with water and hexane. The organic layer was collected and dried over MgSO₄, and all solvents were removed. The crude mixture from which the solvent was removed was subjected to silica gel short column to remove black impurities. Again, all solvents were removed and methanol was added to form a solid. The resulting solid was filtered and washed with methanol to obtain a ligand of the following structure, 8-(4-(tert-butyl)phenyl)-6-methyl-1,2,3,5-tetrahydro-s-indacene (8.5 g, 80% , white solid).

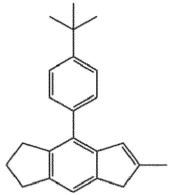

¹H-NMR (500 MHz, CDCl₃, ppm): 7.44~7.31(m, 4H), 7.12(s, 1H), 6.47(s, 1H), 3.19(s, 2H), 2.97(t, 2H), 2.09-2.02(m, 5H), 1.38(s, 9H).

### Step 12-2. Preparation of Ligand compound (6-(tert-butoxy)hexyl)(4-(4-(tert-butyl)phenyl)-2-methyl-1,5,6,7-tetrahydro-s-indacen-1-yl)(4-(4-(tert-butyl)phenyl)-2-methyl-1H-inden-1-yl)(methyl)silane

4-(4-(*tert*-butyl)phenyl)-2-methyl-1H-indene (19 mmol, 5 g) was added to a 100 mL Schlenk flask to make an argon atmosphere. When the argon atmosphere was made, anhydrous hexane (66 mL) and anhydrous MTBE (13 mL) were added, and the mixture was cooled to -25°C. n-BuLi (2.5 M in Hexane, 21 mmol, 8.4 mL) was slowly injected, and after the injection was completed, the temperature was raised to room temperature and the mixture was stirred for 3 hours. After completion of the stirring, the mixture was cooled to -25°C again, and tether silane (15.20 mmol, 4.1 g) was injected into the flask with one shot, and slowly filtered at room temperature to remove LiCI, and then the solvent was dried to prepare (6-(tert-butoxy) hexyl)(4-(4-(tert-butyl)phenyl)-2-methyl-1H-inden-1 -yl)chloro(methyl)silane .

Then, 8-(4-(*tert*-butyl)phenyl)-6-methyl-1,2,3,5-tetrahydro-s-indacene (19 mmol, 5.75 g) obtained in step 12-1 and CuCN (0.95 mmol, 0.09 g) were added to another 100 mL Schlenk flask to made an argon atmosphere. When the argon atmosphere was made, anhydrous MTBE (48 mL) was added thereto, and the mixture was cooled to -25°C. n-BuLi (2.5 M in Hexane, 21 mmol, 8.4 mL) was slowly injected, and when the injection was completed, the temperature was raised to room temperature and the mixture was stirred for 3 hours. After completion of the stirring, the mixture was cooled to -25°C again, and the previously synthesized (6-(tert-butoxy)hexyl)(4-(4-(tert-butyl)phenyl)-2-methyl-1H-inden-1-yl)chloro(methyl)silane was injected into the flask with one shot. Then, the temperature was slowly raised to room temperature and the mixture was stirred for 16 hours. The resultant was purified by silica gel column to obtain a ligand compound of the following structure, (6-(tert-butoxy)hexyl)(4-(4-(tert-butyl)phenyl)-2-methyl-1,5,6,7-tetrahydro-s-indacen-1-yl)(4-(4-(tert-butyl)phenyl)-2-methyl-1H-inden-1-yl)(methyl)silane (10.87 mmol, 8.30 g, 57%, light yellow solid).

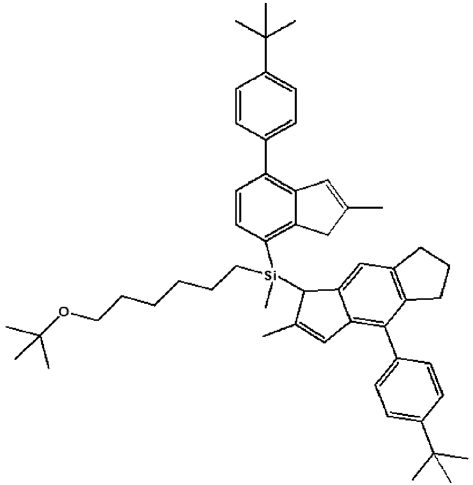

¹H-NMR (500 MHz, CDCl₃, ppm): 7.78~7.41 (m, 6H), 7.34~7.31(m, 3H), 7.28-7.12(m, 2H), 6.84~6.80(m, 1H), 6.56~6.54(m, 1H), 3.77~3.60(m, 2H), 3.27-3.23(1, 2H), 2.97~2.81(m, 4H), 2.20-2.09(m, 6H), 2.04~2.02(m, 2H), 1.39~1.38(m, 18H), 1.15(s, 9H), 1.52~0.43(m, 10H), 0.02~-0.15(m, 3H).

### Step 12-3. Preparation of Transition metal compound (6-(tert-butoxy)hexyl)(methyl)silanediyl(4-(4-(tert-butyl)phenyl)-2-methyl-1,5,6,7-tetrahydro-s-indacen-1-yl)(4-(4-(tert-butyl)phenyl)-2-methyl-1H-inden-1-yl)zirconium dichloride

(6-(Tert-butoxy)hexyl)(4-(4-(tert-butyl)phenyl)-2-methyl-1,5,6,7-tetrahydro-s-indacen-1-yl)(4-(4-(tert-butyl)phenyl)-2-methyl-1H-inden-1-yl)(methyl)silane ligand (2.62 mmol, 2 g) obtained in step 12-2 was added to a 50 mL Schlenk flask to make an argon atmosphere. When the argon atmosphere was made, anhydrous diethyl ether (52.4 mL) was added and cooled to -25°C. n-BuLi (2.5 M in Hexane, 5.76 mmol, 2.3 mL) was slowly injected, and when the injection was completed, the temperature was raised to room temperature and the mixture was stirred for 3 hours. After completion of the stirring, the Schlenk flask under argon containing this solution and ZrCl₄-2(THF) (2.62 mmol, 1.0 g) was cooled to -78°C, and the ligand solution was transferred to a flask containing zirconium at low temperature. After slowly raising the temperature to room temperature, the mixture was stirred for 16 hours. After completion of the stirring, the resulting solid was filtered off under argon atmosphere, and the solvent was dried to obtain a crude mixture. This was dissolved in a minimum amount of anhydrous toluene and stored at - 25°C to -30°C to form a solid. The resulting solid was liberated by adding an excess of hexane when it was in a low temperature state, and then filtered and collected. Then, the obtained solid was dried and purified to obtain a catalyst compound, that is, a transition metal compound (6-(tert-butoxy)hexyl)(methyl)silanediyl(4-(4-(tert-butyl)phenyl)-2-methyl-1,5,6,7-tetrahydro-s-indacen-1-yl)(4-(4-(tert-butyl)phenyl)-2-methyl-1H-inden-1-yl)zirconium dichloride (0.49 mmol, 0.45 g, 19%, yellow solid).

¹H-NMR (500MHz, CDCl₃, ppm): 7.48~7.46 (m, 3H), 7.42~7.40(m, 5H), 7.25~7.23(m, 2H), 7.18~7.16(m, 2H), 6.69(s, 1H), 3.38~3.35(t, 2H), 3.01~2.79(m, 4H), 2.35(s, 3H), 2.21(s, 3H), 2.03~1.94(m, 2H), 1.88~1.35(m, 10H), 1.15(s, 9H), 1.33(s, 18H), 1.19(s, 9H), 1.16~1.12(m, 3H).

### Comparative Synthesis Example 4

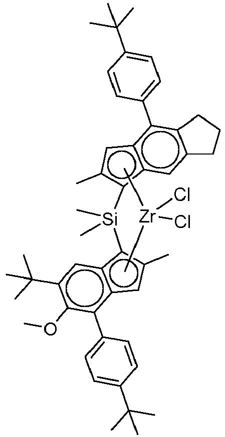

### Step 13-1. Preparation of ligand compound (4-(4'-(tert-butyl)phenyl)-2-methyl-1,5,6,7-tetrahydro-s-indacen-1-yl)dimethyl(4-(4'-(tert-butyl)-6-tert-butyl-5-methoxy-phenyl)-2-methyl indene) silane

The ligand compound (4-(4'-(tert-butyl)phenyl)-2-methyl-1,5,6,7-tetrahydro-s-indacen-1-yl)dimethyl(4-(4'-(tert-butyl)-6-tert-butyl-5-methoxy-phenyl)-2-methyl indene) silane was prepared in the same manner as in step 4-1 of Synthesis Example 4, except that in step 4-1 of Synthesis Example 4, 4-(4'-(tert-butyl)-6-tert-butyl-5-methoxy-phenyl)-2-methyl indene was used instead of 4-(4'-(tert-butyl)phenyl)-2-methyl indene as a reactant.

### Step 13-2. Preparation of Transition metal compound dimethyl silanediyl (4-(4'-(tert-butyl)phenyl)-2-methyl-1,5,6,7-tetrahydro-s-indacen-1-yl)(4-(4'-(tert-butyl)-6-tert-butyl-5-methoxy-phenyl)- 2-methyl-1H-inden-1-yl) zirconium chloride

The transition metal compound having the above structure, dimethyl silanediyl (4-

(4'-(tert-butyl)phenyl)-2-methyl-1,5,6,7-tetrahydro-s-indacen-1-yl)(4-(4'-(tert-butyl)-6-tert-butyl-5-methoxy-phenyl)-2-methyl-1H-inden-1-yl) zirconium chloride (Comparative Synthesis Example 4) was prepared in the same manner as in step 4-2 of Synthesis Example 4, except that the ligand obtained in step 13-1 was used.

¹H-NMR (500 MHz, CDCl₃, ppm): 0.23(s, 6H), 1.29(s,18H), 1.41(s, 9H), 1.76(S, 6H), 1.92(m, 2H), 2.80(m, 4H), 3.85(s, 3H), 6.36(s, 2H), 7.28-7.36(m,9H), 7.58(s, 1H).

### Comparative Synthesis Example 5

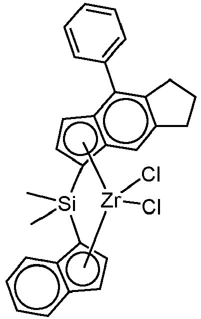

### Step 14-1. Preparation of Ligand compound (4-phenyl-1,5,6,7-tetrahydro-s-indacen-1-yl) dimethyl indene silane

The ligand compound (4-phenyl-1,5,6,7-tetrahydro-s-indacen-1-yl) dimethyl indene silane was prepared in the same manner as in step 1-1 of Synthesis Example 1, except that in step 1-1 of Synthesis Example 1, indene was used instead of 2-methyl indene as a reactant, and 4-phenyl-1,5,6,7-tetrahydro-s-indacene was used instead of 2-methyl-4-phenyl-1,5,6,7-tetrahydro-s-indacene.

### Step 14-2. Preparation of Transition metal compound dimethyl silanediyl(4-phenyl-1,5,6,7-tetrahydro-s-indacen-1-yl)(1H-inden-1-yl) zirconium chloride

The transition metal compound having the above structure, Dimethyl Silanediyl(4-phenyl-1,5,6,7-tetrahydro-s-indacen-1-yl)(1H-inden-1-yl) zirconium chloride (Comparative Synthesis Example 5) was prepared in the same manner as in step 1-2 of Synthesis Example 1, except that the ligand obtained in step 14-1 was used.

¹H-NMR (500 MHz, CDCl₃, ppm): 0.22(s, 6H), 1.96(m, 2H), 2.83(m, 4H), 6.36(d, 2H), 6.58(d, 2H), 7.18-7.50(m, 10H).

### Comparative Synthesis Example 6

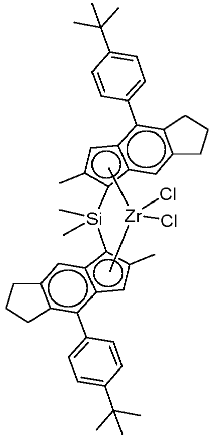

The transition metal compound having the above structure, 1,1'-dimethylsilylene-bis[2-methyl-4-(4-tert-butylphenyl)-5,6,7-trihydro-s-indacen-1 -yl]} zirconium dichloride (Comparative Synthesis Example 6) was prepared as disclosed in PCT Patent Application Publication WO 2006-097497 A1.

### Comparative Synthesis Example 7

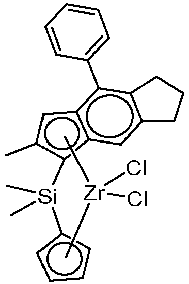

### Step 15-1. Preparation of Ligand compound (2-methyl-4-phenyl-1,5,6,7-tetrahydro-s-indacen-1-yl) dimethyl cyclopentadienyl silane

The ligand compound (2-methyl-4-phenyl-1,5,6,7-tetrahydro-s-indacen-1-yl) dimethyl cyclopentadienyl silane was prepared in the same manner as in step 1-1 of Synthesis Example 1, except that in step 1-1 of Synthesis Example 1, sodium cyclopentadienyl (sodium Cp, Na cyclopentadiene) in THF (1.0 M) was used instead of 2-methyl indene Li Salt solution as a reactant.

### Step 15-2. Preparation of Transition metal compound dimethyl silanediyl(2-methyl-4-phenyl-1,5,6,7-tetrahydro-s-indacen-1-yl)(cyclopentadienyl) zirconium chloride

The transition metal compound having the above structure, dimethyl Silanediyl(2-methyl-4-phenyl-1,5,6,7-tetrahydro-s-indacen-1-yl)(cyclopentadienyl) zirconium chloride (Comparative Synthesis Example 7) was prepared in the same manner as in step 1-2 of Synthesis Example 1, except that the ligand obtained in step 15-1 was used.

¹H-NMR (500 MHz, CDCl₃, ppm): 0.22(s, 6H), 1.80(S, 3H), 1.98(m, 2H), 2.80(m, 4H), 6.35(d, 2H), 6.41(s, 1H), 6.50(d, 2H), 7.41~7.46(m, 6H).

### <Preparation of supported catalyst>

### Preparation Example 1

50 mL of toluene was added to a pico reactor, to which 7 g of silica gel ( SYLOPOL 952X, calcinated under 250°C) was added under Ar, and 10 mmol of methylaluminoxane (MAO) was slowly injected at room temperature, and the mixture was reacted with stirring at 95°C for 24 hours. After completion of the reaction, the mixture was cooled to room temperature and left for 15 minutes, and the solvent was decanted using a cannula. Toluene (400 mL) was added thereto, and the mixture was stirred for 1 minute and left for 15 minutes, and the solvent was decanted using a cannula.

60 µmol of the metallocene compound of Synthesis Example 1 was dissolved in 30 mL of toluene, and then transferred to a reactor using a cannula. The mixture was reacted with stirring at 80°C for 2 hours. After the reaction was completed and the precipitation was completed, the reaction mixture was cooled to room temperature and left for 15 minutes. The upper layer solution was removed and the remaining reaction product was washed with toluene. After washing again with hexane, 2 wt% of an antistatic agent, N,N-bis(2-hydroxyethyl)pentadecylamine (Atmer 163), based on silica weight (g), was dissolved in 3mL of hexane based on silica weight (g), and added thereto, and then the mixture was stirred at room temperature for 10 minutes. After the reaction was completed and the precipitation was completed, the upper layer was removed and transferred to a glass filter to remove the solvent.

The resultant was subjected to a primary drying at room temperature for 5 hours under vacuum, and to a secondary drying at 45° C for 4 hours under vacuum to obtain a silica-supported metallocene catalyst in the form of solid particles.

### Preparation Examples 2 to 9

The silica-supported metallocene catalyst in the form of solid particles was prepared in the same manner as in Preparation Example 1, except that the metallocene compounds of Synthesis Examples 2 to 9 were respectively used instead of the metallocene compound of Synthesis Example 1.

### Comparative Preparation Examples 1 to 7

The silica-supported metallocene catalyst was prepared in the same manner as in Preparation Example 1, except that the metallocene compounds of Comparative Synthesis Examples 1 to 7 were respectively used instead of the metallocene compound of Synthesis Example 1.

### <Polyethylene Polymerization>

### Example 1

An ethylene-1-hexene copolymer was prepared in the presence of the supported catalyst obtained in Preparation Example 1, and the specific method is as follows.

A 600 mL stainless steel reactor was vacuum dried at 120°C and then cooled. 1 g of trimethylaluminum (TMA) was added to 250 g of hexane at room temperature, and the mixture was stirred for 10 minutes. After removing all the reacted hexane, 250 g of hexane and 0.5 g of triisobutylaluminum (TIBAL) were added thereto, and the mixture was stirred for 5 minutes. Then, 7 mg of the supported catalyst obtained in Preparation Example 1 was added thereto and then stirred while raising the temperature to 70°C. After stopping the stirring at 70°C, 10 mL of 1-hexene (C6) as a comonomer was added, and ethylene (ethylene, C2) was filled up to 30 bar, and then stirring was started. After the polymerization for 30 minutes, unreacted C2 was vented.

### Examples 2 to 9

An ethylene-1-hexene copolymer was prepared in the same manner as in Example 1, except that the supported catalysts of Preparation Examples 2 to 9 were respectively used instead of the supported catalyst of Preparation Example 1.

### Comparative Example 1

An ethylene-1-hexene copolymer was prepared in the same manner as in Example 1, except that the supported catalyst of Comparative Preparation Example 1 was used instead of the supported catalyst of Preparation Example 1.

### Comparative Examples 2 and 3

An ethylene-1-hexene copolymer was prepared in the same manner as in Comparative Example 1, except that the addition amount of 1-hexene (C6) as a comonomer was changed to 20 mL (Comparative Example 2) and 25 mL (Comparative Example 3), respectively.

### Comparative Example 4

An ethylene-1-hexene copolymer was prepared in the same manner as in Example 1, except that the supported catalyst of Comparative Preparation Example 2 was used instead of the supported catalyst of Preparation Example 1.

### Comparative Examples 5 and 6

An ethylene-1-hexene copolymer was prepared in the same manner as in Comparative Example 4, except that the addition amount of 1-hexene (C6) as a comonomer was changed to 20 mL (Comparative Example 5) and 25 mL (Comparative Example 6), respectively.

### Comparative Example 7

An ethylene-1-hexene copolymer was prepared in the same manner as in Example 1, except that the supported catalyst of Comparative Preparation Example 3 was used instead of the supported catalyst of Preparation Example 1.

### Comparative Example 8

An ethylene-1-hexene copolymer was prepared in the same manner as in Comparative Example 7, except that the addition amount of 1-hexene (C6) as a comonomer was changed to 20 mL.

### Comparative Example 9

An ethylene-1-hexene copolymer was prepared in the same manner as in Example 1, except that the supported catalyst of Comparative Preparation Example 4 was used instead of the supported catalyst of Preparation Example 1.

### Comparative Example 10

An ethylene-1-hexene copolymer was prepared in the same manner as in Example 1, except that the supported catalyst of Comparative Preparation Example 5 was used instead of the supported catalyst of Preparation Example 1.

### Comparative Example 11

An ethylene-1-hexene copolymer was prepared in the same manner as in Example 1, except that the supported catalyst of Comparative Preparation Example 6 was used instead of the supported catalyst of Preparation Example 1.

### Comparative Example 12

An ethylene-1-hexene copolymer was prepared in the same manner as in Example 1, except that the supported catalyst of Comparative Preparation Example 7 was used instead of the supported catalyst of Preparation Example 1.

### <Test Example: Polyethylene polymerization process and physical property evaluation>

The catalytic activity, process stability and physical properties of the polyethylene copolymer of the Examples and Comparative Examples were measured by the following method, and the results are shown in Table 1 below.

### (1) Catalytic activity (kg PE/g cat·hr)

It was calculated as the ratio of the weight (kg PE) of the polyethylene copolymer produced per unit time (h) per the supported catalyst content (g Cat) used per unit time (h).

### (2) Melting point (Tm, °C)

Tm was measured using a differential scanning calorimeter (DSC).

Specifically, the melting temperature of the polymer was measured using a DSC 2920 (TA instrument) as a differential scanning calorimeter (DSC). Specifically, the polymer was heated to 150°C and held for 5 minutes, then and the temperature was lowered to -100°C and then increased again. At this time, the speed of a temperature rise and drop was adjusted to 10°C/min, respectively. The melting temperature was taken as the maximum point of the endothermic peak measured in the section where the second temperature rises.

### (3) Weight average molecular weight (Mw, g/mol)

The weight average molecular weight (Mw) of the polyethylene copolymer was measured using gel permeation chromatography (GPC, manufactured by Water).

Specifically, a Waters PL-GPC220 instrument was used as the gel permeation chromatography (GPC) instrument, and a Polymer Laboratories PLgel MIX-B 300 mm length column was used. In this case, an evaluation temperature was 160°C, and 1,2,4-trichlorobenzene was used for a solvent at a flow rate of 1 mL/min. Each polyethylene sample was pretreated by dissolving it in 1,2,4-trichlorobenzene containing 0.0125% of BHT at 160°C for 10 hours using a GPC analyzer (PL-GP220), and the sample was prepared at a concentration of 10 mg/10 mL and then supplied in an amount of 200 µL. The values of Mw and Mn were obtained using a calibration curve formed using a polystyrene standard. 9 kinds of the polystyrene standard were used with the molecular weight of 2000 g/mol, 10000 g/mol, 30000 g/mol, 70000 g/mol, 200000 g/mol, 700000 g/mol, 2000000 g/mol, 4000000 g/mol, 10000000 g/mol.

### (4) Number of short chain branches (SCB, FT-IR)

With respect to the polyethylene copolymers of Examples and Comparative Examples, the number of short chain branches (SCB) (content of branches having 2 to 7 carbon atoms per 1000 carbons) was measured by infrared spectroscopy (FT-IR).

Specifically, the polyethylene copolymer sample was pretreated by dissolving it in 1,2,4-trichlorobenzene containing 0.0125% BHT at 160°C for 10 hours using PL-SP260VS, and then measured using PerkinElmer Spectrum 100 FT-IR connected with high temperature GPC (PL-GPC220) at 160°C.

### (5) Evaluation of morphology of polymers

With respect to the polyethylene copolymers of Examples and Comparative Examples, the appearance and touch of the obtained copolymer powder were visually and tactilely confirmed, and the morphology of the polymer was evaluated.

Specifically, after drying all the obtained powders under the same conditions, the morphology of the polymer is evaluated as very good if particles are scattered like sand grains and the grains maintain their original shape. The morphology of the polymer is evaluated as good if particles are scattered like sand grains, but there are particles where the grains aggregate like a snowman. The morphology of the polymer is evaluated as bad if particles are entangled in a lump rather than sand grains. In particular, when the morphology of the polyethylene copolymer is poor, it may be difficult to put into the gas phase polymerization reaction for the production of linear low-density polyethylene.

**[Table 1]**

| | Compound | Amount of C6 used (mL) | Activity (kg PE /g · ca t · hr) | Mw (×10³ g/mol) | Tm (°C) | SCB (Numb er/1000 C) | Morphology Evaluation |
|---|---|---|---|---|---|---|---|
| Example 1 | Synthesis Example 1 | 10 | 4.5 | 530 | 123.5 | 5.2 | very good |
| Example 2 | Synthesis Example 2 | 10 | 5.1 | 400 | 124.2 | 5.0 | very good |
| Example 3 | Synthesis Example 3 | 10 | 6.2 | 480 | 121.5 | 5.8 | very good |
| Example 4 | Synthesis Example 4 | 10 | 5.9 | 450 | 118.5 | 6.5 | very good |
| Example 5 | Synthesis Example 5 | 10 | 5.2 | 480 | 124.5 | 5.2 | very good |
| Example 6 | Synthesis Example 6 | 10 | 6.0 | 460 | 125.7 | 4.5 | very good |
| Example 7 | Synthesis Example 7 | 10 | 6.7 | 450 | 117.2 | 6.8 | very good |
| Example 8 | Synthesis Example 8 | 10 | 5.5 | 580 | 121.8 | 5.8 | very good |
| Example 9 | Synthesis Example 9 | 10 | 6.0 | 480 | 121.6 | 5.9 | very good |
| Compar ative Example 1 | Comparative Synthesis Example 1 | 10 | 3.2 | 450 | 127.7 | 2.2 | good |
| Compar ative Example 2 | Comparative Synthesis Example 1 | 20 | 2.9 | 380 | 124.1 | 3.9 | bad |
| Compar ative Example 3 | Comparative Synthesis Example 1 | 25 | unmea surable | unmea surable | unmea surable | unmea surable | - (Fouling) |
| Compar ative Example 4 | Comparative Synthesis Example 2 | 10 | 2.7 | 400 | 128.4 | 1.9 | good |
| Compar ative Example 5 | Comparative Synthesis Example 2 | 20 | 3.0 | 350 | 125.8 | 2.9 | bad |
| Compar ative Example 6 | Comparative Synthesis Example 2 | 25 | unmea surable | unmea surable | unmea surable | unmea surable | - (Fouling) |
| Compar ative Example 7 | Comparative Synthesis Example 3 | 10 | 2.1 | 350 | 126.8 | 3.5 | good |
| Compar ative Example 8 | Comparative Synthesis Example 3 | 20 | 1.5 | 300 | 123.5 | 4.1 | bad |
| Compar ative Example 9 | Comparative Synthesis Example 4 | 10 | 0.7 | 350 | 124.8 | 3.8 | good |
| Compar ative Example 10 | Comparative Synthesis Example 5 | 10 | 1.1 | 150 | 127.8 | 1.8 | good |
| Compar ative Example 11 | Comparative Synthesis Example 6 | 10 | 5.1 | 500 | 128.1 | 1.1 | bad |
| Compar ative Example 12 | Comparative Synthesis Example 7 | 10 | 1.1 | 330 | 129.2 | 1.3 | good |

As shown in Table 1, it can be confirmed that the polyethylene copolymers of Examples 1 to 9 according to the present disclosure employ a supported catalyst containing a metallocene compound having an asymmetric structure consisting of a specific bridge group and indacene and indene ligands, and thus, the number of short chain branches (SCB) per 1000 carbons appears at a very high level in the range of 4.5/1000C to 6.8/1000C.

On the other hand, in the case of Comparative Examples in which the copolymerization process is performed with different substituents and structures of the catalyst, it can be confirmed that even if the addition amount of 1-hexene (C6) as a comonomer is increased, there is a problem that it is difficult to increase the SCB content, or the catalytic activity decreases or the morphology of polyethylene is not good.

Specifically, in the case of Comparative Examples 1 and 4 in which 10 mL of comonomer 1-hexene (C6) is added in the same manner as in Examples, it can be confirmed that the number of short chain branches (SCB) per 1000 carbon atoms is significantly lowered to 2.2/1000C and 1.9/1000C. Further, even in the case of Comparative Examples 2 and 5 in which the amount of the comonomer 1-hexene (C6) is increased to 20 mL, it can be confirmed that the number of short chain branches (SCB) per 1000 carbons is only 3.9/1000C and 2.9/1000C, and even if the amount is doubled, it is difficult to secure more than 4/1000C, and also the morphology is also deteriorated. Moreover, in the case of Comparative Examples 3 and 6 in which the amount of the comonomer 1-hexene (C6) is further increased to 25 mL, fouling occurs in the polymerization process and thus, it is impossible to evaluate the physical properties of the polymer.

On the other hand, even when using a catalyst containing a metallocene compound having an asymmetric ligand structure similar to the structure of the catalyst used in Examples, in the case of Comparative Example 7 in which 10 mL of comonomer 1-hexene (C6) is added in the same manner as in Examples, the number of short chain branches (SCB) per 1000 carbons is significantly reduced to 3.5/1000C. In addition, in the case of Comparative Example 8 in which the amount of the comonomer 1-hexene (C6) is further increased to 20 mL using the same catalyst as in Comparative Example 7, the number of short chain branches (SCB) per 1000 carbons is increased to 4.1/1000C, but the catalytic activity in the polymerization process is significantly decreased by 4 kg PE/g_cat_h or more, and also the weight average molecular weight of the obtained polyethylene copolymer is lowered, and the morphology is also poor.

Further, in the case of Comparative Example 9, which methoxy at position 5 and tert-butyl at position 6 of indene are contained in the metallocene compound of the catalyst, it has physical properties similar to those of Examples, but its activity is very low, which causes a drawback that the overall process cost and the synthetic unit price increase. Similarly, in the case of Comparative Example 10 in which there is no methyl group at position 2 of indene and indacene, it can be confirmed that not only the activity is low, but also the molecular weight is low and the copolymerizability is poor.

Further, in the case of Comparative Example 11 in which the ligand compound structure is a bis indacene structure rather than an indene-indacene combination, it can be confirmed that it maintains the activity and molecular weight similar to those of Examples, but the copolymerizability is significantly deteriorated, and the SCB content becomes very small. Furthermore, in the case of Comparative Example 12 in which the ligand compound structure is a cyclopentadiene-indacene structure rather than an indene-indacene combination, it can be confirmed that not only the activity is poor, but also the molecular weight is low and copolymerizability is poor.

## Claims

1. A transition metal compound represented by the following Chemical Formula 1: 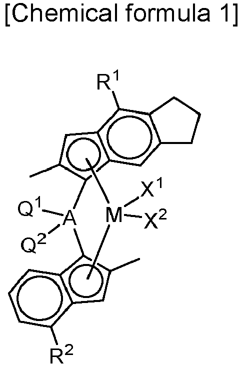 wherein in Chemical Formula 1,
A is a Group 14 element,
M is a Group 4 transition metal,
R' and R² are the same as or different from each other, and are each independently hydrogen, C₁₋₂₀ alkyl, C₂₋₂₀ alkenyl, C₁₋₂₀ alkylsilyl, C₁₋₂₀ silylalkyl, C₁₋₂₀ alkoxysilyl, C₁₋₂₀ alkoxy, C₆₋₂₀ aryl, C₇₋₂₀ alkylaryl, or C₇₋₂₀ arylalkyl,
X¹ and X² are the same or different from each other, and are each independently halogen, and
Q¹ and Q² are the same as or different from each other, and are each independently C₁₋₂₀ alkyl;
provided the following two compounds are excluded:

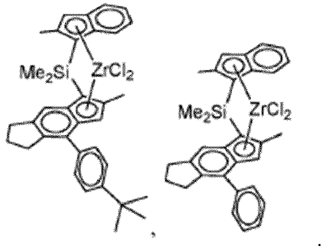

2. The transition metal compound of claim 1, wherein:
A is silicon, and
M is zirconium.

3. The transition metal compound of claim 1 or 2, wherein:
R¹ and R² are each hydrogen, phenyl, or phenyl substituted with C₁₋₆ straight-chain or branched alkyl.

4. The transition metal compound according to any one of claims 1 to 3,
which is represented by the following Chemical Formula 1-1: 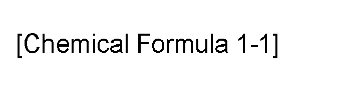 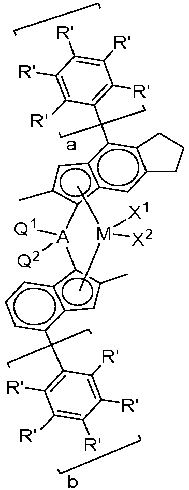 wherein in Chemical Formula 1-1,
A, M, X¹, X², Q¹, and Q² are as defined in claim 1;
R' is the same as or different from each other, and are each independently hydrogen or C₁₋₆ straight-chain or branched alkyl; and
a and b are each independently 0 or 1.

5. The transition metal compound of claim 4, wherein:
at least one of R' in the Chemical Formula 1-1 is C₃₋₆ branched alkyl, and the remaining R' is hydrogen.

6. The transition metal compound according to any one of claims 1 to 5, wherein:
Q¹ and Q² are each independently C₁₋₆ straight-chain or branched alkyl.

7. The transition metal compound according to any one of claims 1 to 6, wherein:
the compound represented by the Chemical Formula 1 is any one selected from the group consisting of the following:

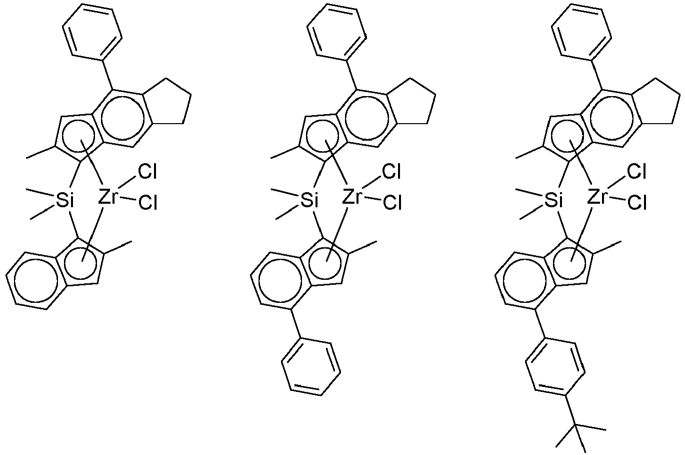

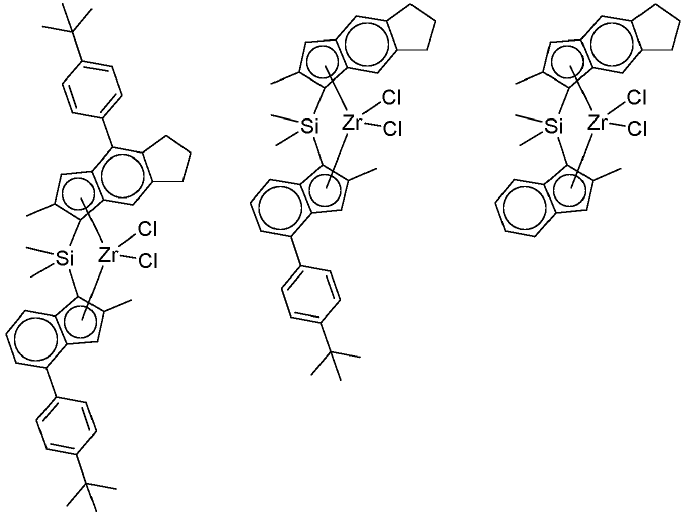

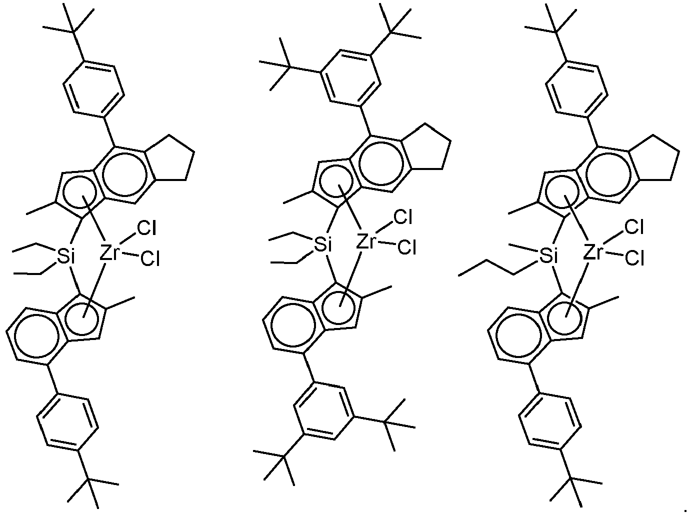

8. A catalyst composition comprising the transition metal compound according to any one of claims 1 to 7.

9. The catalyst composition of claim 8,
which comprises the transition metal compound and a support.

10. The catalyst composition of claim 8 or 9,
which further comprises at least one cocatalyst selected from the group consisting of compounds represented by the following Chemical Formulas 2 to 4:
[Chemical Formula 2] -[Al(R²¹)-O]ₘ-
-wherein in Chemical Formula 2,
R²¹ are the same as or different from each other, and are each independently halogen, C₁₋₂₀ alkyl or C₁₋₂₀ haloalkyl; and
m is an integer of 2 or more;
[Chemical Formula 3] J(R³¹)₃
wherein in Chemical Formula 3,
R³¹ are the same as or different from each other, and are each independently halogen, C₁₋₂₀ alkyl or C₁₋₂₀ haloalkyl; and
J is aluminum or boron;
[Chemical Formula 4] [E-H]⁺[ZQ₄]⁻ or [E]⁺[ZQ₄]⁻
wherein in Chemical Formula 4,
E is a neutral or cationic Lewis base,
[E-H]⁺ and [E]⁺ are each a Bronsted acid;
H is a hydrogen atom;
Z is a Group 13 element; and
Q are the same as or different from each other, and are each independently C₆₋₂₀ aryl or C₁₋₂₀ alkyl, wherein said C₆₋₂₀ aryl or C₁₋₂₀ alkyl is unsubstituted or substituted with one or more substituents selected from the group consisting of halogen, C₁₋₂₀alkyl, C₁₋₂₀ alkoxy and C₆₋₂₀ phenoxy.

11. The catalyst composition according to any one of claims 8 to 10,
which further comprises at least one antistatic agent represented by the following Chemical Formula 5:
[Chemical Formula 5] R⁵¹N-(CH₂CH₂OH)₂
wherein in Chemical Formula 5,
R⁵¹ is C₈₋₃₀ straight-chain alkyl.

12. A method for preparing polyethylene comprising copolymerizing ethylene and an alpha-olefin in the presence of the catalyst composition according to any one of claims 8 to 10.

13. The method of claim 12, wherein:
the alpha-olefin is at least one selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicosene, and mixtures thereof.

14. The method of claim 12 or 13, wherein:
the ethylene copolymerization has a catalytic activity of 4.0 kg PE /g·cat·hr or more, and the catalytic activity is a value obtained by measuring the weight (kg PE) of polyethylene produced per the weight (g) of the catalyst composition used based on the unit time (h).

## Patentansprüche

1. Übergangsmetallverbindung, dargestellt durch die folgende chemische Formel 1: 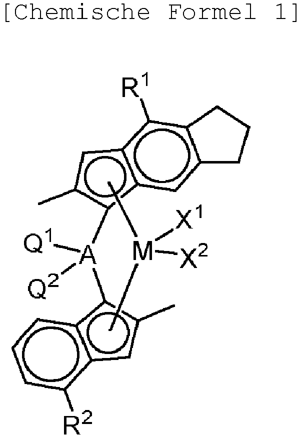 worin in der chemischen Formel 1
A ein Element der Gruppe 14 ist
M ein Übergangsmetall der Gruppe 4 ist,
R¹ und R² gleich oder voneinander verschieden sind und jeweils unabhängig Wasserstoff, C₁₋₂₀-Alkyl, C₂₋₂₀-Alkenyl, C₁₋₂₀-Alkylsilyl, C₁₋₂₀-Silylalkyl, C₁₋₂₀-Alkoxysilyl, C₁₋₂₀-Alkoxy, C₆₋₂₀-Aryl, C₇₋₂₀-Alkylaryl oder C₇₋₂₀-Arylalkyl sind,
X¹ und X² gleich oder voneinander verschieden sind und jeweils unabhängig Halogen sind, und
Q¹ und Q² gleich oder voneinander verschieden sind und jeweils unabhängig C₁₋₂₀-Alkyl sind,
mit der Maßgabe, dass die folgenden zwei Verbindungen ausgenommen sind:

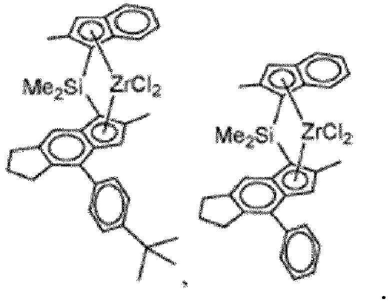

2. Übergangsmetallverbindung gemäß Anspruch 1, worin:
A Silicium ist, und
M Zirkonium ist.

3. Übergangsmetallverbindung gemäß Anspruch 1 oder 2, worin:
R¹ und R² jeweils Wasserstoff, Phenyl oder mit geradkettigem oder verzweigtem C₁₋₆-Alkyl substituiertes Phenyl sind.

4. Übergangsmetallverbindung gemäß irgendeinem der Ansprüche 1 bis 3,
welche durch die folgende chemische Formel 1-1 dargestellt ist: 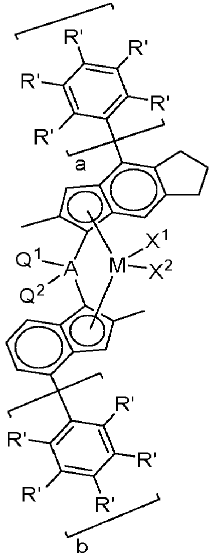 worin in der chemischen Formel 1-1
A, M, X¹, X², Q¹ und Q² wie in Anspruch 1 definiert sind;
die R' gleich oder voneinander verschieden sind und jeweils unabhängig Wasserstoff oder geradkettiges oder verzweigtes C₁₋₆-Alkyl sind; und
a und b jeweils unabhängig 0 oder 1 sind.

5. Übergangsmetallverbindung gemäß Anspruch 4, worin:
zumindest eines der R' in der chemischen Formel 1-1 verzweigtes C₃₋₆-Alkyl ist und die verbleibenden R' Wasserstoff sind.

6. Übergangsmetallverbindung gemäß irgendeinem der Ansprüche 1 bis 5, worin:
Q¹ und Q² jeweils unabhängig geradkettiges oder
verzweigtes C₁₋₆-Alkyl sind.

7. Übergangsmetallverbindung gemäß irgendeinem der Ansprüche 1 bis 6, worin:
die durch die chemische Formel 1 dargestellte Verbindung irgendeine ist, die ausgewählt ist aus der Gruppe bestehend aus den Folgenden:

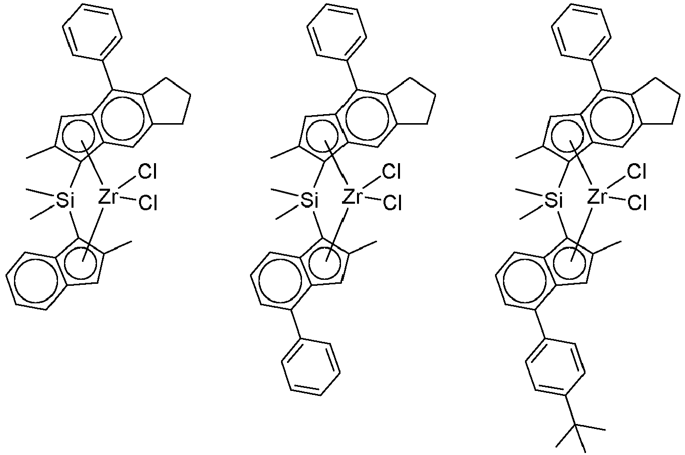

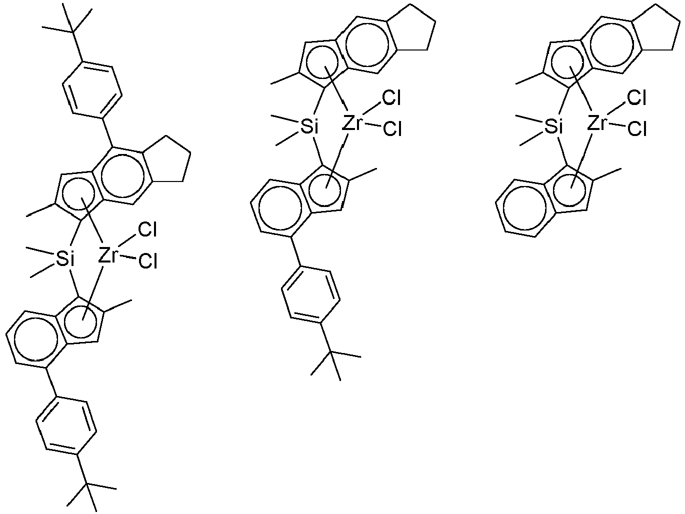

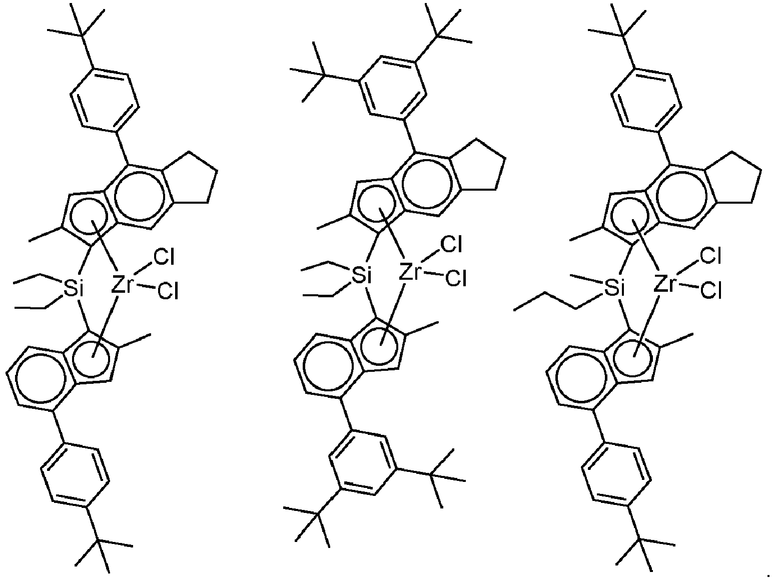

8. Katalysatorzusammensetzung, umfassend die Übergangsmetallverbindung gemäß irgendeinem der Ansprüche 1 bis 7.

9. Katalysatorzusammensetzung gemäß Anspruch 8,
die die Übergangsmetallverbindung und einen Träger umfasst.

10. Katalysatorzusammensetzung gemäß Anspruch 8 oder 9,
welche ferner zumindest einen Co-Katalysator umfasst, ausgewählt aus der Gruppe, die aus Verbindungen besteht, die durch die folgenden chemischen Formeln 2 bis 4 dargestellt werden:
[Chemische Formel 2] -[Al(R²¹)-O]ₘ-
-worin in der chemischen Formel 2
die R²¹ gleich oder voneinander verschieden sind und jeweils unabhängig Halogen, C₁₋₂₀-Alkyl oder C₁₋₂₀-Haloalkyl sind; und
m eine ganze Zahl von 2 oder größer ist;
[Chemische Formel 3] J(R³¹)₃
worin in der chemischen Formel 3
die R³¹ gleich oder voneinander verschieden sind und jeweils unabhängig Halogen, C₁₋₂₀-Alkyl oder C₁₋₂₀-Haloalkyl sind; und
J Aluminium oder Bor ist;
[Chemische Formel 4] [E-H]⁺[ZQ₄]⁻ oder [E]⁺[ZQ₄]⁻
worin in der chemischen Formel 4
E eine neutrale oder kationische Lewis-Base ist,
[E-H]⁺ und [E]⁺ jeweils eine Bronsted-Säure sind;
H ein Wasserstoffatom ist;
Z eine Element der Gruppe 13 ist; und
die Q gleich oder voneinander verschieden sind und jeweils unabhängig C₆₋₂₀-Aryl oder C₁₋₂₀-Alkyl sind, worin das C₆₋₂₀-Aryl oder das C₁₋₂₀-Alkyl unsubstituiert ist oder substituiert ist mit einem oder mehreren Substituenten, ausgewählt aus der Gruppe bestehend aus Halogen, C₁₋₂₀-Alkyl, C₁₋₂₀-Alkoxy und C₆₋₂₀-Phenoxy.

11. Katalysatorzusammensetzung gemäß irgendeinem der Ansprüche 8 bis 10,
welche ferner zumindest ein durch die folgende chemische Formel 5 dargestelltes Antistatikmittel umfasst:
[Chemische Formel 5] R⁵¹N-(CH₂CH₂OH)₂
worin in der chemischen Formel 5
R⁵¹ geradkettiges C₈₋₃₀-Alkyl ist.

12. Verfahren zur Herstellung von Polyethylen, umfassend das Copolymerisieren von Ethylen und einem Alpha-Olefin in der Gegenwart der Katalysatorzusammensetzung gemäß irgendeinem der Ansprüche 8 bis 10.

13. Verfahren gemäß Anspruch 12,
worin das Alpha-Olefin zumindest eines ist, das ausgewählt ist aus der Gruppe bestehend aus 1-Buten, 1-Penten, 1-Hexen, 4-Methyl-1-penten, 1-Octen, 1-Decen, 1-Dodecen, 1-Tetradecen, 1-Hexadecen, 1-Octadecen, 1-Eicosen und Mischungen hiervon.

14. Verfahren gemäß Anspruch 12 oder 13, worin:
die Ethylen-Copolymerisation eine katalytische Aktivität von 4,0 kg PE/g·kat·h oder größer aufweist und die katalytische Aktivität ein Wert ist, der erhalten wird durch Messen des Gewichts (kg PE) von Polyethylen, das bezogen auf die Zeiteinheit (h) je Gewicht (g) der verwendeten Katalysatorzusammensetzung hergestellt wird.

## Revendications

1. Composé de métal de transition représenté par la Formule chimique 1 suivante : 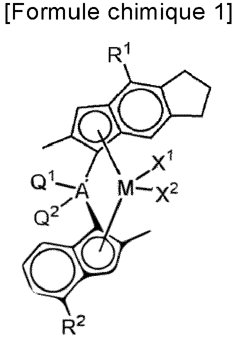
dans lequel dans la Formule chimique 1,
A est un élément du groupe 14,
M est un métal de transition du groupe 4,
R¹ et R² sont identiques ou différents l'un de l'autre, et sont chacun indépendamment hydrogène, alkyle en C₁₋₂₀, alcényle en C₂₋₂₀, alkylsilyle en C₁₋₂₀, silylalkyle en C₁₋₂₀, alcoxysilyle en C₁₋₂₀, alcoxy en C₁₋₂₀, aryle en C₆₋₂₀, alkylarlyle en C₇₋₂₀, ou arylalkyle en C₇₋₂₀,
X¹ et X² sont identiques ou différents l'un de l'autre, et sont chacun indépendamment halogène, et
Q¹ et Q² sont identiques ou différents l'un de l'autre, et sont chacun indépendamment alkyle en C₁₋₂₀ ;
à condition que les deux composés suivants soient exclus :

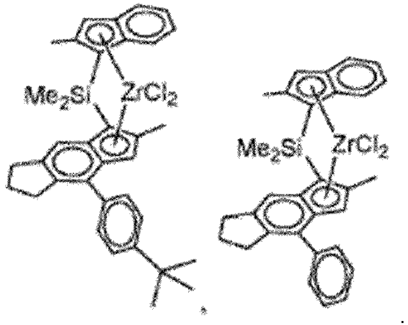

2. Composé de métal de transition selon la revendication 1, dans lequel :
A est silicium, et
M est zirconium.

3. Composé de métal de transition selon la revendication 1 ou la revendication 2, dans lequel :
R¹ et R² sont chacun hydrogène, phényle, ou phényle substitué par alkyle en C₁₋₆ à chaîne droite ou ramifié.

4. Composé de métal de transition selon l'une quelconque des revendications 1 à 3,
qui est représenté par la Formule chimique 1-1 suivante : 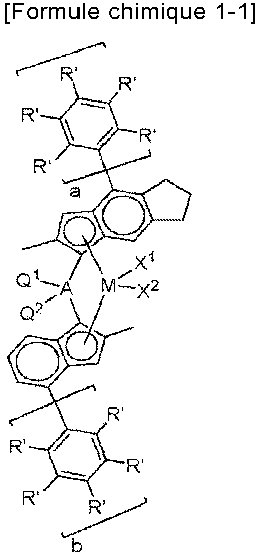 dans lequel dans la Formule chimique 1-1,
A, M, X¹, X², Q¹ et Q² sont tels que définis en revendication 1 ;
R' sont identiques ou différents les uns des autres, et sont chacun indépendamment hydrogène ou alkyle en C₁₋₆ à chaîne droite ou ramifié ;
a et b sont chacun indépendamment 0 ou 1.

5. Composé de métal de transition selon la revendication 4, dans lequel :
au moins l'un des R' dans la Formule chimique 1-1 est alkyle en C₃₋₆ ramifié, et le R' restant est hydrogène.

6. Composé de métal de transition selon l'une quelconque des revendications 1 à 5, dans lequel :
Q¹ et Q² sont indépendamment alkyle en C₁₋₆ à chaîne droite ou ramifié.

7. Composé de métal de transition selon l'une quelconque des revendications 1 à 6, dans lequel :
le composé représenté par la Formule chimique 1 est l'un quelconque sélectionné dans le groupe consistant en les suivants :

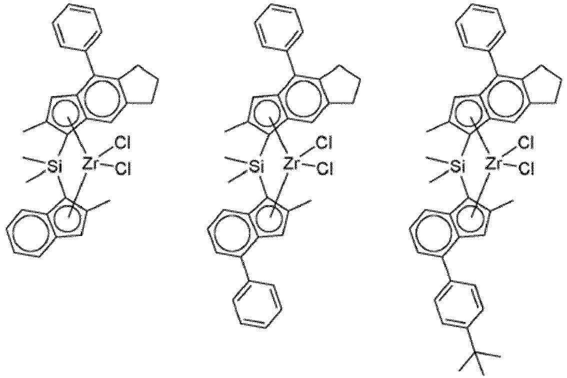

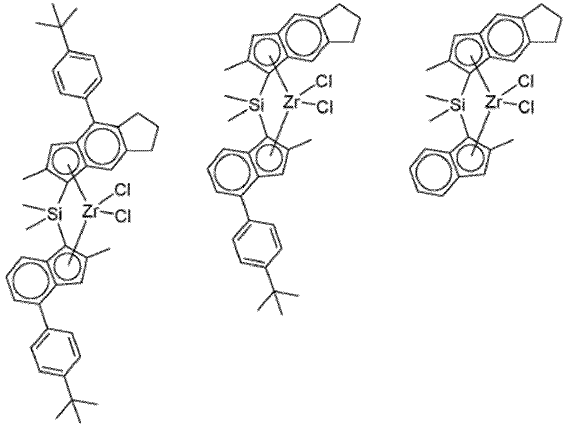

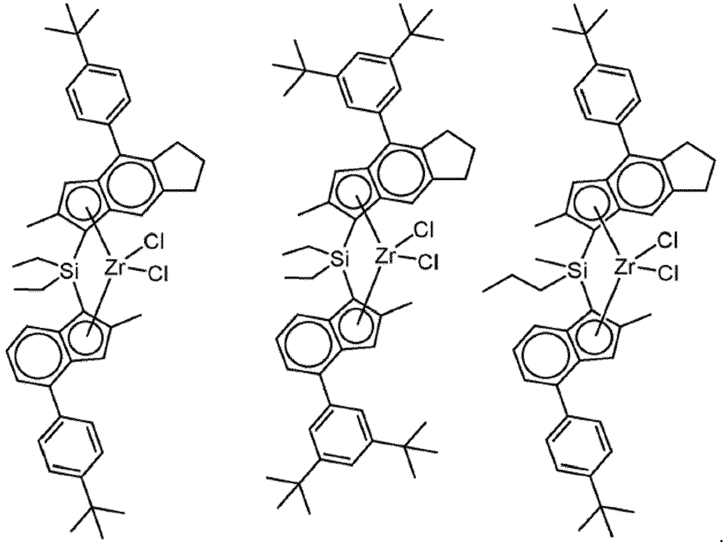

8. Composition de catalyseur comprenant le composé de métal de transition selon l'une quelconque des revendications 1 à 7.

9. Composition de catalyseur selon la revendication 8,
qui comprend le composé de métal de transition et un support.

10. Composition de catalyseur selon la revendication 8 ou la revendication 9,
qui comprend en outre au moins un co-catalyseur sélectionné dans le groupe consistant en des composés représentés par les Formules chimiques 2 à 4 suivantes :
[Formule chimique 2] -[Al(R²¹)-O]ₘ-
-dans lequel, dans la Formule chimique 2,
R²¹ sont identiques ou différents les uns des autres, et sont chacun indépendamment halogène, alkyle en C₁₋₂₀ ou haloalkyle en C₁₋₂₀ ; et
m est un nombre entier de 2 ou plus ;
[Formule chimique 3] J(R³¹)₃
dans lequel, dans la Formule chimique 3,
R³¹ sont identiques ou différents les uns des autres, et sont chacun indépendamment halogène, alkyle en C₁₋₂₀ ou haloalkyle en C₁₋₂₀ ; et
J est aluminium ou bore ;
[Formule chimique 4] [E-H]⁺[ZQ₄]⁻ ou [E]+[ZQ₄]⁻
dans la Formule chimique 4,
E est une base de Lewis neutre ou cationique,
[E-H]⁺ et [E]⁺ sont chacun un acide de Brönsted ;
H est un atome d'hydrogène ;
Z est un élément du groupe 13 ; et
Q sont identiques ou différents les uns des autres, et sont chacun indépendamment aryle en C₆₋₂₀ ou alkyle en C₁₋₂₀, dans lequel ledit aryle en C₆₋₂₀ ou ledit alkyle en C₁₋₂₀ est non substitué ou substitué par un ou plusieurs substituants sélectionnés dans le groupe consistant en halogène, alkyle en C₁₋₂₀, alcoxy en C₁₋₂₀ et phénoxy en C₆₋₂₀.

11. Composition de catalyseur selon l'une quelconque des revendications 8 à 10,
qui comprend en outre au moins un agent antistatique représenté par la Formule chimique 5 suivante :
[formule chimique 5] R⁵¹N-(CH₂CH₂OH)₂
dans lequel, dans la Formule chimique 5,
R⁵¹ est alkyle en C₈₋₃₀ à chaîne droite.

12. Procédé de préparation de polyéthylène comprenant la copolymérisation d'éthylène et d'une alpha-oléfine en présence de la composition de catalyseur selon l'une quelconque des revendications 8 à 10.

13. Procédé selon la revendication 12, dans lequel :
l'alpha-oléfine est au moins l'une sélectionnée dans le groupe consistant en 1-butène, 1-pentène, 1-hexène, 4-méthyl-1-pentène, 1-octène, 1-décène, 1-dodécène, 1-tétradécène, 1-hexadécène, 1-octadécène, 1-éicosène, et des mélanges de ceux-ci.

14. Procédé selon la revendication 12 ou la revendication 13, dans lequel :
la copolymérisation d'éthylène présente une activité catalytique de 4,0 kg PE /g·cat·h ou plus, et l'activité catalytique est une valeur obtenue en mesurant le poids (kg PE) de polyéthylène produit par le poids (g) de la composition de catalyseur utilisée sur la base de l'unité de temps (h).
